# EUROPÄISCHE PATENTSCHRIFT

(11) **EP 0 937 217 B1**
(45) Veröffentlichungstag und Bekanntmachung des Hinweises auf die Patenterteilung: **26.03.2003**
(21) Anmeldenummer: 98951337.9
(22) Anmeldetag: 01.09.1998
(51) Int. Cl.: F16N 27/00

(54) **SCHMIERMITTELVERSORGUNGSSYSTEM FÜR PROFILVERBINDUNGEN VON WELLE UND NABE MIT AXIALER LÄNGSVERSCHIEBLICHKEIT**
LUBRICANT FEEDING SYSTEM FOR SHAFT AND HUB PROFILE ASSEMBLIES WITH AXIAL LONGITUDINAL DISPLACEMENT CAPACITY
SYSTEME D'ALIMENTATION EN LUBRIFIANT POUR ASSEMBLAGES DE PROFILS D'ARBRE ET DE MOYEU POUVANT COULISSER LONGITUDINALEMENT DANS LE SENS AXIAL

(30) Priorität: 05.09.1997 DE 19738896
(43) Veröffentlichungstag der Anmeldung: 25.08.1999
(73) Patentinhaber: Voith Turbo GmbH & Co. KG, 89522 Heidenheim (DE)
(72) Erfinder: LINDENTHAL, Hans, D-89522 Heidenheim (DE)
(74) Vertreter: Dr. Weitzel & Partner
(86) Internationale Anmeldenummer: EP9805530
(87) Internationale Veröffentlichungsnummer: WO99013261

(56) Entgegenhaltungen:
- EP-A- 0 525 498
- DE-A- 4 023 835

## Beschreibung

Die Erfindung betrifft ein Schmiermittelversorgungssystem für Profilverbindungen von Welle und Nabe mit axialer Längsverschieblichkeit, im einzelnen mit den Merkmalen aus dem Oberbegriff des Anspruches 1.

Formschlüssige Verbindungen zur Übertragung von Drehmoment in Form von Profilverbindungen, die zusätzlich die Möglichkeit einer Relativbewegung von Welle und Nabe in axialer Richtung erlauben, sind in einer Vielzahl von Ausführungen bei unterschiedlichen Einsatzzwecken bekannt. Der Voith-Druck G 1121 4.85 offenbart eine Kompaktgelenkwelle mit einem axialen Längenausgleich im Mittelbereich in Form einer Profilverbindung. Dem axialen Längenausgleich ist zur Begrenzung der Axialbewegung ein Anschlag zugeordnet. Zur Gewährung der Realisierung der Funktion und zum Geringhalten des Verschleißes ist es erforderlich, daß die Profilverbindung über die gesamte Breite in ausreichendem Maße geschmiert wird. Dazu ist es üblich, den Nabenteilen der Profilverbindung entsprechende Schmiereinrichtungen zuzuordnen, welche mit einem Schmiermittelversorgungskanal, der in einer am Innenumfang des Nabenteiles eingearbeitete Profilnut, die in Umfangsrichtung des Nabenteiles verläuft, d.h. in Rotations- oder entgegen der Rotationsrichtung, gekoppelt sind. Das Schmiermittel sollte sich dann im wesentlichen in der am Innenumfang des Nabenteiles angeordneten Verteilernut verteilen und in den Raum, der durch die in den vorstehenden Profilen eingearbeitete Nut realisiert wird, und demzufolge einen nicht zu überdeckenden Zwischenraum bildet, gelangen, von welchem es wiederum in die durch das bei Ineinandergreifen der Profile der einzelnen Bestandteile der Profilverbindungen bestehende Spiel bedingten Zwischenräumen zwischen die aneinander anliegenden Profilteilen (Ausnehmungen und Vorsprüngen) von Welle und Nabe gelangt, so daß das Schmiermittel im wesentlichen über die gesamte axiale Erstreckung der Profilverbindung verteilt werden kann. Ein wesentlicher Nachteil einer derartigen Ausführung besteht jedoch darin, daß bei Profilverbindungen großen Durchmessers zur Gewährleistung einer ausreichenden Schmiermittelversorgung eine entsprechend hohe Menge an Schmiermittel erforderlich ist. Zum Einbringen der großen Mengen an Schmiermittel in die Verteilernut und das Verteilen über die axiale Erstreckung der Profilverbindung bzw. der Gesamterstreckung in axialer Richtung der einzelnen Bestandteile der Profilverbindung bei axialer Längsverschiebung ist dazu eine gewisse Zeit erforderlich, welche sich in Stillstandszeiten an Arbeitsmaschinen, welche über einen Antriebsstrang mit integrierter Profilverbindung angetrieben werden, resultiert.

Ein weiterer wesentlicher Nachteil besteht darin, daß zur Realisierung einer möglichst gleichmäßigen und vollständigen Schmierung, welche eine hohe Schmiermittelmenge erfordert, gleichzeitig eine zunehmende Verschmutzung der Anlage in Kauf genommen werden muß. Auf die Schmierung selbst hat der Betreiber außer im unmittelbaren Bereich der Anordnung der Schmiermittelversorgungskanäle keinen Einfluß. So besteht die Möglichkeit, daß trotz erhöhtem Schmiermitteldurchlaufes, da das überschüssige Schmiermittel aus der Profilverbindung bei axialer Längsverschiebung austritt, keine vollständige Schmierung vorgenommen wird.

Der Erfindung liegt daher die Aufgabe zugrunde, eine Profilverbindung mit axialer Längsverschiebbarkeit der eingangs genannten Art derart weiterzuentwickeln, daß die genannten Nachteile vermieden werden. Im einzelnen soll dabei die erforderliche Schmiermittelmenge erheblich reduziert werden, wobei auch die erforderlichen Zeitabstände zwischen den einzelnen Schmiermittelversorgungstakten länger bemessen sein sollten. Das Schmiermittelversorgungssystem soll sich des weiteren durch einen einfachen Aufbau auszeichnen und eine möglichst vollständige und gleichmäßige Schmierung der einzelnen Bestandteile der Profilverbindung von Welle und Nabe realisieren. Die Schmierung sollte dabei zwangsläufig erfolgen und nicht abhängig sein von der Anzahl der Schmiermittelversorgungskanäle, welche den Außenumfang der Nabe mit der Verteilernut verbinden.

Die erfindungsgemäße Lösung ist durch die Merkmale der Ansprüche 1 und 2 charakterisiert. Vorteilhafte Ausgestaltungen sind in den Unteransprüchen wiedergegeben.

Das Schmiermittelversorgungssystem für eine Profilverbindung einer Welle und einer Nabe mit axialer Längsverschieblichkeit, bei welchem ein erstes außeres Element der Profilverbindung - Welle oder Nabe - ein anderes zweites inneres Element der Profilverbindung - Nabe oder Welle - wenigstens teilweise in Umfangsrichtung umschließt, umfaßt entweder wenigstens eine im Bereich des Profilgrundes am Innenumfang des äußeren Elementes der Profilverbindung und sich durch die Profilvorsprünge erstreckend angeordnete Verteilernut oder eine im Bereich des Profilgrundes am Außenumfang des inneren Elementes der Profilverbindung und sich durch die Profilvorsprünge erstreckend angeordnete Verteilernut. Die Verteilernut erstreckt sich im ersten Fall über wenigstens einen Teil des innenumfanges des äußeren Elementes der Profilverbindung in Umfangsrichtung und ist mit wenigstens einem, sich zum Außenumfang des äußeren Elementes der Profilverbindung erstreckenden Schmiermittelversorgungskanal gekoppelt. Im zweiten Fall erstreckt sich die Verteilernut über wenigstens einen Teil des Außenumfanges des inneren Elementes der Profilverbindung in Umfangsrichtung und ist mit wenigstens einem, sich zur Symmetrieachse des inneren Elementes erstreckenden Schmiermittelversorgungskanal gekoppelt. Erfindungsgemäß ist ein in der Verteilernut sich über deren Länge in Umfangsrichtung erstreckendes Verteilerelement angeordnet. Das Verteilerelement unterteilt die Verteilernut in einen ersten radial außen liegenden und einen zweiten radial innen liegenden Teilbereich. Das Verteilerelement und die Verteilernut sind derart gestaltet und ausgelegt, daß diese in ihrem Zusammenwirken wenigstens eine, vorzugsweise jedoch eine Mehrzahl von Ventilstellen zwischen dem ersten und dem zweiten Teilbereich der Verteilernut bilden. Als äußere Elemente der Profilverbindung fungieren je nach Zuordnung zur An- bzw. Abtriebsseite entweder die Welle oder die Nabe.

Durch diese Ventilwirkung wird vorranging bzw. zuerst ein Verteilen der Schmiermittelmenge am Außenumfang oder Innenumfang des Verteilerelementes über die Verteilernut erzielt, bevor das Schmiermittel zum zweiten Teilbereich übertritt und damit in wenigstens die, durch die Einarbeitung der Verteilernut in den Profilvorsprüngen des äußeren Elementes bzw. des inneren Elementes der Profilverbindung bedingten Profillücken und die mit diesen gekoppelten Bereiche, welche durch die miteinander in Eingriff stehenden Profile der einzelenen Elemente der Profilverbindung bedingt werden, gelangt, wodurch eine nahezu gleichmäßige zeitlich festlegbare Versorgung mit Schmiermittel über den gesamten Umfang bzw. wenigstens den Teilbereich des Profilquerschnittes, welchen die Verteilernut umschließt, gewährleistet werden kann. Die erfindungsgemäße Lösung ermöglicht es desweiteren, Profilverbindungen, insbesondere Profilverbindungen mit großem Durchmesser bzw. Profilquerschnittsbereichen mit großer Fläche möglichst gleichmäßig und vollständig mit genau dosierter Schmiermittelmenge zu schmieren. Dies bedeutet, daß immer nur die Menge Schmiermittel benutzt wird, die tatsächlich benötigt wird und somit eine zusätzliche Verschmutzung, welche mit der Menge der verwendeten Schmiermittelmenge wächst, für die Anlage vermieden werden kann. Insbesondere ist eine derartige Einrichtung bei bereits bestehenden und im Einsatz befindlichen Anlagen ohne große Probleme nachrüstbar, da in der Regel eine zentrale Verteilernut bereits vorhanden ist und zur Realisierung der Ventilfunktion bei entsprechender Auslegung und Verwendung geeigneter Verteilerelemente, vorzugsweise ringförmiger Elemente kein großer Nachrüst- bzw. arbeitungsaufwand erforderlich ist.

Für die Zuordnung und Ausgestaltung der Verteilernut in Umfangsrichtung sind im wesentlichen die zwei folgend genannten Grundvarianten denkbar:
1. Es sind wenigstens eine nur einen Teilbereich in Umfangsrichtung überdeckende Verteilernut oder eine Mehrzahl dieser Nuten, welche in Umfangsrichtung hintereinander angeordnet werden, wobei die Verteilernuten frei von einer Kopplung untereinander sind, vorgesehen.
2. Die Verteilernut erstreckt über den gesamten Umfang bezogen auf den Querschnitt des äußeren Elementes oder im zweiten Fall des inneren Elementes, vorzugsweise ringförmig in Umfangsrichtung, d.h. über den gesamten Innenumfang des äußeren Elementes der Profilverbindung oder über den gesamten Außenumfang des inneren Elementes. Das Verteilerelement ist in diesem Fall als ringförmiges Element ausgeführt, vorzugsweise als in sich geschlossenes ringförmiges Element.

Die erste Möglichkeit bietet dabei den Vorteil, daß auch kritische Bereiche einer Welle-Nabe-Profilverbindung gesondert für sich allein und/oder verstärkt geschmiert werden können, ohne daß die Schmierung über den gesamten Umfangsbereich erfolgen muß. Vorzusgweise erfolgt die Anordnung der Verteilernuten zueinander in Umfangsrichtung derart, daß die einzelnen Verteilernuten jeweils nur durch einen Profilvorsprung am äußeren Element oder bei Anordnung am inneren Element durch einen Profilvorsprung am inneren Element der Profilverbindung voneinander getrennt sind. Größere Abstände zwischen den einzelnen Verteilernuten sind ebenfalls denkbar.

Bei der zweiten besonders vorteilhaften Möglichkeit umfaßt das Schmiermittelversorgungssystem für Profilverbindungen von Welle und Nabe mit axialer Längsverschieblichkeit für den erst genannten Fall der Anordnung der Verteilernut am äußeren Element eine im Bereich des Innenumfanges des äußeren Elementes der Profilverbidung, beispielsweise der Nabe, in Umfangsrichtung verlaufende Verteilernut. Die Verteilernut ist über wenigstens einen Schmiermittelversorgungskanal, welcher sich in radialer Richtung zum Außenumfang des äußeren Elementes der Profilverbindung, in diesem Fall der der Nabe, erstreckt, mit einer Schmiermittelversorgungsquelle koppelbar. Erfindungsgemäß ist vorgesehen, daß ein Verteilerelement in Form eines in Umfangsrichtung verlaufenden vorzugsweise in sich geschlossenen ringförmigen Elementes in der Verteilernut angeordnet wird. Dieses ringförmige Element unterteilt die Verteilernut in einen ersten Teilbereich und einen zweiten Teilbereich. Der erste Teilbereich ist dabei - bezogen auf die Symmetrieachsen von Welle und Nabe in Einbaulage - auf einem Durchmesser, welcher größer als der Durchmesser, auf welchem der zweite Teilbereich angeordnet ist, vorgesehen. Erfindungsgemäß übt das ringförmige Element eine Ventilwirkung für das Schmiermittel aus. Dies bedeutet, daß das Schmiermittel zeitlich und mengenmäßig dosiert vom ersten Teilbereich in den zweiten Teilbereich eingebracht werden kann, von wo es in die Profilverbindung einläuft. Diese Ausführung bietet zusätzlich den Vorteil, daß bei vorhandenen Profilverbindungen die bereits vorhandenen Verteilernuten genutzt werden können und durch das Vorsehen des Verteilerringes hinsichtlich der mit der erfindungsgemäßen Lösung zu erzielenden Funktionen auf einfache Art nachrüstbar sind.

Bei der zweiten, besonders vorteilhaften Möglichkeit umfaßt das Schmiermittelversorgungssystem für Profilverbindungen von Welle und Nabe mit axialer Längsverschieblichkeit für den zweitgenannten Fall der Anordnung der Verteilernut am inneren Element eine im Bereich des Außenumfanges des inneren Elementes der Profilverbindung in Umfangsrichtung verlaufende Verteilernut. Die Verteilernut ist über wenigstens einen Schmiermittelversorgungskanal, welcher sich in radialer Richtung zur Symmetrieachse des Innenelementes der Profilverbindung erstreckt, mit einer Schmiermittelversorgungsquelle koppelbar. Als Schmiermittelversorgungsquelle kann dabei eine zentrale Versorgungsleitung durch das innere Element, welches im Bereich der Symmetrieachse des inneren Elementes durch dieses verläuft, verwendet werden. Erfindungsgemäß ist vorgesehen, daß ein Verteilerelement in Form eines in Umfangsrichtung verlaufenden, vorzugsweise in sich geschlossenen ringförmigen Elementes in der Verteilernut angeordnet wird. Dieses ringförmige Element unterteilt dann die Verteilernut in einen ersten Teilbereich und einen zweiten Teilbereich, wobei der erste Teilbereich bezogen auf die Symmetrieachsen von Welle und Nabe in Einbaulage auf einen Durchmesser angeordnet ist, welcher kleiner als der Durchmesser ist, auf welchem der zweite Teilbereich angeordnet ist. Das ringförmige Element übt eine Ventilwirkung für das Schmiermittel aus. Dies bedeutet auch hier, daß das Schmiermittel zeitlich und mengenmäßig dosiert vom ersten Teilbereich in den zweiten Teilbereich eingebracht werden kann, von wo es in die Profilverbindung einläuft.

Als Schmiermittel findet bevorzugt Fett Verwendung. Der Einsatz von Ölen oder anderen Schmiermitteln ist jedoch ebenfalls denkbar.

Die Ventilwirkung für beide Grundvarianten kann auf unterschiedliche Art und Weise realisiert werden. Im einzelnen werden im wesentlichen zwei grundlegende Ausführungsvarianten unterschieden:
1. Abdichtfunktion des Verteilerelementes bzw. ringförmigen Elementes, welche wenigstens bei Schmiermittelzufuhr im Bereich des Zwischenraumes, welcher sich an die Verteilernut im Bereich des Profiles des äußeren Elementes der Profilverbindung anschließt, aufhebbar ist.
2. Vorsehen von Spalten im Bereich der Auflageflächen des Verteilerelementes bzw. ringförmigen Elementes in der Verteilernut durch das Vorsehen von entweder entsprechenden Ausnehmungen im Bereich der Verteilernut und/oder aber entsprechenden Ausnehmungen am ringförmigen Element.

Die Drosselwirkung ist einstellbar über das Verhältnis der Summe der Querschnitte der Übertrittsspalten zur Summe der Querschnitte der Verteilerkanäle, d.h. u.a. in Abhängigkeit der Anzahl der Verteilerkanäle und/oder deren Größe. Es besteht theoretisch auch die Möglichkeit in die Verteilerkanäle bzw. die Verteilernuten und/oder im Bereich der Übertrittsspalten Drosselstellen einzuarbeiten. Die Einarbeitung kann auch zusätzlich zu den anderen Maßnahmen erfolgen.

Zur Realisierung dieser Ausführungsvarianten ist das Verteilerelement bzw. das ringförmige Element entsprechend hinsichtlich des Materials auszuwählen, auszulegen und anzuordnen.

Im erstgenannten Fall bei Anordnung der Verteilernut am äußeren Element ist das Verteilerelement bzw. das ringförmige Element derart ausgelegt, daß es im Zustand der Nichtschmiermittelzufuhr den zweiten Teilbereich gegenüber dem ersten Teilbereich im wesentlichen abdichtet und im Zustand der Schmiermittelzufuhr unter dem Aufbau eines Überdruckes im Verteilerkanal sich wenigstens im Bereich der Zwischenräume, die durch das Einarbeiten der Verteilernut in das Profil des äußeren Elementes der Profilverbindung, beispielsweise der Nabe an den vorstehenden Profilteilen ergeben und welche im Querschnitt vorzugsweise größer gestaltet sind als der Querschnitt der Verteilernut, zum Teil durchbiegt und aufgrund der Durchbiegung Schmiermittel zur Druckentlastung in diesen Zwischenraum abgibt, von wo es in die Zwischenräume der ineinandergreifenden Profile gelangt. Das Verteilerelement bzw. das ringförmige Element erzeugt dann in diesen Bereichen sogenannte Übertrittsspalten, welche sich durch einen wesentlich geringeren Öffnungsquerschnitt als der des Schmiermittelversorgungskanales auszeichnen, Erfindungsgemäß baut sich dabei im ersten Teilbereich der Verteilernut während der Schmiermittelzufuhr ein hoher Druck auf, welcher an der Außenfläche des Verteilerelementes bzw. des ringförmigen Elementes wirksam wird. Solange die durch den Druck auf die Außenfläche bedingte Kraft geringer als die durch die Beschaffenheit des Verteilerelementes bzw. des ringförmigen Elementes entgegengesetzt gerichtete Kraft ist oder mit dieser im Gleichgewicht steht, ist das Schmiermittel gezwungen, im ersten Teilbereich sich entlang des Außenumfanges des Verteilerelementes bzw. des ringförmigen Elementes in der Verteilernut zu verteilen. Erst wenn die Kraft die durch das Verteilerelemwent bzw. das ringförmige Element erzeugbare Gegenkraft übersteigt, wird im Bereich der Zwischenräume in den vorstehenden Profilen eine Durchbiegung des Verteilerelementes bzw. des ringförmigen Elementes möglich, welche einen Übertrittsspalt zwischen dem ersten und dem zweiten Teilbereich erzeugt, der eine Schmiermittelströmung vom ersten in den zweiten Teilbereich ermöglicht und damit eine Druckentlastung im ersten Teilbereich. Der entstehende Spalt übt dabei gleichzeitig noch eine Dosierwirkung aus. Diese Aussagen gelten jedoch nur modifiziert für den Fall der Erstschmierung. Bei der Erstschmierung, d.h. bevor überhaupt Schmiermittel in die Verteilernut eingebracht wird, enthält die Verteilernut Luft mit geringer Viskosität. Die Luft in der Verteilernut muß demzufolge zuerst einmal aus dieser austreten. Zur Realisierung dessen genügt es beispielsweise im Bereich der Kontaktstellen von Dichtelement und Wand der Verteilernut entsprechende Rauhigkeitsunterschiede vorzusehen, welche einen Übertritt von Luft ermöglichen, jedoch nach wie vor eine Abdichtwirkung gegenüber Schmiermittel erfüllen. Erst nach dem Entweichen der Luft baut sich der Druck im ersten Teilbereich der Verteilernut auf. Das hier beschriebene Prinzip gilt in Analogie auch für die Anordnung der Verteilernut am inneren Element.

Eine andere Möglichkeit besteht darin, das ringförmige Element unabhängig von der Anordnung der Verteilernut als mehrteilige Baugruppe auszuführen, wobei die Dichtwirkung und die Entstehung der Spalten durch das Zusammenwirken der einzelnen Teileelemente verwirklicht werden. Eine erste Möglichkeit besteht darin, das Verteilerelement aus einer Vielzahl miteinander gekoppelter jedoch in axialer Richtung gegeneinander verschiebbarer Teilringe auszuführen. Eine weitere Möglichkeit besteht darin, das Verteilerelement als Kombination eines Stützringes und eines Dichtringes auszuführen. Der Stützring ist dabei in radialer Richtung innen angeordnet und stützt den Dichtring, welcher radial außen angeordnet ist. Der Dichtring wird dann entweder unter Druckeinfluß im ersten Teilbereich der Verteilernut in radialer Richtung verformt und gibt somit durch entsprechende Mitverformung des Stützringes die entsprechenden Spalten frei oder aber, der Dichtring ist mit Durchlässen in Richtung des Stützringes versehen. Im letzgenannten Fall können die gewünschten Durchlaßspalten bereits durch das Vorsehen entsprechender Oberflächenrauhigkeiten an der zum Dichtring gewandten Außenseite des Stützringes und/oder zum Stützring gewandten Innenseite des Dichtelementes und Druckeinwirkung realisiert werden.

Die zweite mögliche Grundvariante besteht darin, ein Verteilerelement bzw. eine ringförmiges Element in der Verteilernut vorzusehen, wobei zur Erzeugung der Verbindung zwischen dem ersten und dem zweiten Teilbereich der Verteilernut taschenförmige Aussparungen im äußeren Element der Profilverbindung, beispielsweise der Nabe, im Bereich des durch die Nut bedingten Zwischenraumes an den einzelnen Profilvorsprüngen und/oder aber entsprechende Durchlässe am Verteilerelement bzw. am ringförmigen Element selbst vorgesehen sind. Diese ermöglichen eine Drosselwirkung beim Übertritt des Schmiermittels vom ersten Teilbereich in den zweiten Teilbereich über die entsprechenden Öffnungsquerschnitte. In diesem Fall wird keine vollständige Abdichtung zwischen dem ersten und dem zweiten Teilbereich im Betriebszustand des Nichtbefüllens mit Schmiermittel erzeugt, jedoch bedingen die Übertrittsquerschnitte mit geringem Durchmesser eine entsprechende Drosselwirkung, so daß das Schmiermittel zum großen Teil ebenfalls erst über wenigstens einen Teilbereich des Umfanges zum Druckaufbau verteilt werden muß, bevor ein Übertritt erfolgt.

Die erfindungsgemäße Lösung ermöglicht es, mit einer Verteilernut Profilverbindungen mit großem Durchmesser vollständig mit genau dosierter Schmiermittelmenge zu schmieren. D. h., es wird nur die Menge Schmiermittel erforderlich, die tatsächlich benötigt wird. Eine zusätzliche Verschmutzung des Anlage, welche mit der Menge der verwendeten Schmiermittelmenge wächst, kann vermieden werden. Insbesondere ist eine derartige Einrichtung bei bereits bestehenden Anlagen ohne große Probleme nachrüstbar, da eine zentrale Verteilernut in der Regel bereits vorhanden ist und bei entsprechender Auslegung und Verwendung geeigneter ringförmiger Elemente kein großer Nacharbeitungsaufwand erforderlich ist.

Für das Verteilerelement kommen eine Vielzahl von Ausführungen in Betracht. Denkbar ist beispielsweise ein ringförmiges Element in Form eines Kolbenstützringes oder eines Teilbereiches eines Kolbenstützringes. Weitere Möglichkeiten bestehen im Einsatz eines Blechstreifens bzw. Halbzeuges, eines Elastomers, eines Glasfaser-Kohlefaserrohres, geriffelter Stahlbänder e.t.c. Das Verteilerelement bzw. das ringförmige Element kann dabei aus einer Lage oder einer Mehrzahl von Lagen, welche miteinander eine Baueinheit bilden, jedoch gegeneinander in axialer Richtung verschiebbar oder verformbar sind, ausgeführt sein. Die einzelnen Lagen wiederum können aus einer Vielzahl von Schichten, die miteinander unlöslich verbunden sind, gebildet werden. Diese Möglichkeit wird vor allen Dingen für die Gestaltung von Kolbenstützringen ausgenutzt, um die optimalen Eigenschaften bezüglich Elastizität und Steifigkeit sowie Verschleißfestigkeit zu erreichen. Vorzugsweise sind dabei die Schichten, welche die Oberflächen in Umfangsrichtung bilden, aus besonders verschleißfestem Material ausgeführt. Eine weitere Möglichkeit besteht in der Ausführung des Verteilerelementes als Baugruppe, umfassend wenigstens ein Stützelement und ein Dichtelement, wie bereits weiter oben erläutert. Auch in diesem Fall liegt die Auslegung und Auswahl der für den Einsatzfall geeignetsten Kombination im Ermessen des zuständigen Fachmannes.

Beim Einsatz eines Verteilerelementes bzw. eines ringförmigen Elementes, umfassend mehrere Lagen, werden vor allem mehrlagige Bänder, beispielsweise in Form von Stahlbändern oder Halbzeugen, eingesetzt. Andere Ausführungen sind ebenfalls denkbar.

Die Enden der einzelnen Lagen bzw. eines Verteilerelementes in Form eines ringförmigen Elementes können entweder in Form eines Schrägschnittes ausgeführt sein, was vor allem beim Einsatz von ringförmigen Elementen in Form eines Sprengringes bzw. bei Elementen, welche hinsichtlich ihrer Form einer hohen Steifigkeit unterworfen sind, verwirklicht wird. Bei anderen Lagenausführungen ist es des weiteren denkbar, die Enden überlappend miteinander zu verbinden, beispielsweise durch Kleben, wobei die Überlappungsbreite vorzugsweise entsprechend der Breite der Verteilernut ausgefüllt ist. Eine weitere Möglichkeit besteht darin, die Enden auf Stoß miteinander zu koppeln.

Der Einsatz von Kolbenstützringen zur Realisierung dieser Funktion bietet den Vorteil, daß bereits im Handel erhältliche standardisierte ringförmige Elemente zum Einsatz kommen können. Verwendbar sind auch sogenannte Führungsringe, welche aus Gewebeverbundstoffen bestehen und in hochbeanspruchten Gleitverbindungen eingesetzt werden. Diese weisen in der Regel eine hohe Druckfestigkeit und außergewöhnliche Verschleißeigenschaften auf, welche eine lange Lebensdauer gewährleisten.

Zusammenfassend kann festgestellt werden, daß die einzelnen Funktionen durch die Form des Verteilerelementes bzw. dessen Teilbestandteilen und/oder die Auslegung des Verteilerelementes bzw. dessen Teilbestanmdteilen und/oder die Materialwahl und/oder die Oberflächenbeschaffenheit und/oder das Vorsehen von Durchlässen bestimmt werden.

Ein weiterer erheblicher Vorteil der erfindungsgemäßen Lösung besteht darin, daß durch die konkrete Dosierung über wenigstens eine, vorzugsweise jedoch mehrere Ventilstellen, welche über das ringförmige Element in der Verteilernut erzeugt werden, die Anlage von Verschmutzungen im wesentlichen freigehalten werden kann.

Für die Ausführung der Verteilernut sind im wesentlichen zwei grundlegende Möglichkeiten denkbar:
1. Ausführung einer Verteilernut mit in radialer Richtung betrachtet im wesentlichen gleichem Querschnitt.
2. Ausbildung einer Verteilernut in radialer Richtung mit wenigstens zwei Teilnuten unterschiedlicher Abmessungen im Querschnitt.

Bei der erstgenannten Möglichkeit ist es dabei erforderlich, daß das Verteilerelement bzw. das ringförmige Element zur Realisierung der Funktion der Abdichtwirkung im wesentlichen mit einer entsprechenden Breitentoleranz versehen wird, so daß dieses mit seinen Seitenflächen im wesentlichen an den Innenflächen der Verteilernut anliegt und erst durch die Durchbiegung aufgrund des hohen Druckes im ersten Teilbereich ein entsprechender Spalt erzeugt werden kann.

Bei Unterteilung in zwei Teilnuten bei Anordnung der Verteilernut am äußeren Element wird die in radialer Richtung äußere Nut mit einem geringeren Querschnitt versehen als die in radialer Richtung innenliegende Nut. Bei Anordnung der Verteilernut im inneren Element weist die in radialer Richtung äußere Nut einen größeren Querschnitt auf als die in radialer Richtung innere Teilnut. Der Querschnittsübergang wird dabei als Anlage bzw. Dichtfläche genutzt, wobei auch hier ein Spalt zwischen den Seitenbereichen und den Innenflächen der Verteilernut vorgesehen ist. Dieser Spalt ist dabei von seinem Querschnitt her wesentlich geringer als der Querschnitt des der Verteilernut zugeordneten Schmiermittelversorgungskanales. Die Abdichtung wird hier im wesentlichen durch das Anliegen des ringförmigen Elementes im Bereich der in radialer Richtung innenliegenden Verteilernut realisiert. Bei Druckbeaufschlagung und entsprechender Durchbiegung des ringförmigen Elementes wird ein Übertrittsspalt durch Anheben des Druckringes in diesem Bereich erzeugt und kann aufgrund der Durchbiegung im Bereich der Zahnlücken einen Durchflußquerschnitt zu dieser freigeben.

Für den Fall, daß die Spaltdichtung nicht ausreicht, was insbesondere bei großen Profilen auftreten kann, kann das ringförmige Element derart ausgeführt werden, daß die Breitentoleranz nicht mehr so genau festgelegt werden muß sondern großzügiger gehandhabt werden kann, indem dem ringförmigen Element in Form einer O-Ringdichtung ausgeführt ist. Bei dieser handelt es sich um eine Abdichtungsmöglichkeit, welche mittels Standardbauteilen realisiert werden kann und die definierbar ist. Dem ringförmigen Element ist in diesem Fall vorzugsweise zur Führung ein Stützring zugeordnet. Die Unterteilung in zwei Teilbereiche in der Verteilernut erfolgt in diesem Fall über die O-Ringdichtung, wobei unter der Druckbeaufschlagung bei Erzielung eines entsprechend hohen Druckes der O-Ring aufgrund elastischer Verformung teilweise in radialer Richtung in Richtung der Welle verschoben wird, wobei lediglich im Bereich der Zahnlücken wiederum eine Durchbiegung möglich ist, so daß nur in diesen Bereichen ein Austritt von Schmiermittel aus dem ersten Teilbereich des Verteilerkanales in die Zahnlücke erfolgen kann. Der Querschnitt des Stützringes kann dabei verschiedenartig ausgestaltet sein, denkbar ist eine Rechteckform, aber auch eine Rechteckform mit versehener Rundung zur besseren Führung des O-Ringes. Die konkrete Auswahl liegt dabei im Ermessen des Fachmannes. Der Stützring selbst ist nicht nur mit der erforderlichen genauen Breitentoleranz zu fertigen und der Bereich an den Stützringenden kann einfacher gestaltet werden, da dieser für die Abdichtfunktion keinerlei Bedeutung mehr hat. Eine andere Möglichkeit bei den vorher beschriebenen Varianten, den Einfluß einer Verbindung der Stützringenden auf die Funktionsweise möglichst zu minimieren, besteht darin, daß in wenigstens zweiteiligen Ausführungen der Verteilernut die Verbindung derart gestaltet wird, daß diese im radial äußeren Bereich oder inneren Bereich - je nach Zuordnung der Verteilernut zum äußeren oder inneren Element - der Verteilernut hineinreicht. Die Verteilernut ist vorzugsweise in Umfangsrichtung der Profilverbindung angeordnet. Vorzugsweise ist die Verteilernut vollständig in den Profilgrund eingearbeitet. Das ringförmige Element ist dabei vorzugsweise derart angeordnet, daß dieses im wesentlichen im eingebauten Zustand mit dem Profilgrund abschließt. Eine weitere Möglichkeit besteht jedoch auch darin, die Verteilernut bei Projizierung der Senkrechten zur Symmetrielinie der Nabe in eine gemeinsame Ebene geneigt zu dieser auszuführen. Dies bedeutet, daß die Verteilernut nicht einem Querschnitt, dessen einzelne Flächenbestandteile den gleichen axialen Abstand gegenüber einer Bezugsfläche aufweisen. In diesem Fall beschreibt die Nut bei Ansicht von rechts einen Kreisbogen. Im anderen Fall, bei geneigter Ausführung beschreibt die Nut bei Projizierung dieser Ansicht in eine Ebene eine ovale Form.

Die erfindungsgemäße Lösung ist für eine Vielzahl von Profilverbindungen einsetzbar, beispielsweise bei Vielnutprofilen in Form von Keilwellenprofilverbindungen, bei Zahnprofilverbindungen und bei Polygonprofilverbindungen. Als ein möglicher Hauptanwendungsfall wird hier beispielhaft der Einsatz in Gelenkwellen mit axialem Längenausgleich genannt.

Für die Ausführung der Verteilernut sind ebenfalls eine Vielzahl von Möglichkeiten denkbar, diese reichen von einer Ausführung mit konstantem Querschnitt in radialer Richtung bis zu einer Ausführung mit einer Vielzahl von Querschnittsänderungen in radialer Richtung, wobei die Querschnittsabmessungen in radialer Richtung nach innen, d.h. zur Symmetrieachse der Nabe hin, zunehmen. Die Übergänge sind dabei vorzugsweise gerundet ausgeführt, um die Kerbwirkung zu verhindern. Zusammenfassend sei nochmals darauf hingewiesen, daß der zur Umsetzung der Ventilwirkung entstehende bzw. vorgesehene Spalt eine erheblich geringere Querschnittsgröße aufweist als der Querschnitt des Zulaufes, insbesondere des Schmiermittelversorgungskanales. Nur das entsprechende Verhältnis zwischen Zulauf und Spalt ermöglicht den Druckaufbau durch entsprechende Verteilung des Schmiermittels am Außenumfang oder Innenumfang des ringförmigen Elementes je nach Zuordnung der Verteilernut.

Das ringförmige Element selbst kann einen beliebigen Querschnitt aufweisen. Vorzugsweise werden jedoch Ausführungen von ringförmigen Elementen mit rechteckigem oder rundem Querschnitt eingesetzt. Andere Querschnittsformen sind jedoch ebenfalls nicht ausgeschlossen.

Die Wahl der konkreten Ausführung der Verteilernut und der Anordnung des ringförmigen Elementes sowie dessen Auslegung hinsichtlich seiner Gestalt, des Querschnittes sowie des Materiales liegt entsprechend den Einsatzerfordernissen, welche insbesondere auch von der Größe der zu übertragenden Kräfte und damit der Größe der Profilverbindung abhängig sind, im Tätigkeitsbereich des zuständigen Fachmannes.

Die erfindungsgemäße Lösung wird nachfolgend anhand von Figuren erläutert. Darin ist folgendes dargestellt:
- Figuren 1a und 1b: verdeutlichen beispielhaft eine mögliche vorteilhafte Ausführung einer erfindungsgemäß gestalteten Schmiermittelversorgung in einem Axialschnitt und einer Ansicht von rechts;
- Figuren 2a und 2b: verdeutlichen zwei mögliche Ausführungen der Verläufe von Verteilernuten in Umfangsrichtung am Innenumfang der Nabe;
- Figur 3: verdeutlicht beispielhaft eine weitere Ausführung einer erfindungsgemäßen Ausgestaltung eines Schmiermittelsystems mit einer Verteilernut konstanten Querschnittes;
- Figuren 4a und 4b: verdeutlichen zwei Ausführungen für die Gestaltung der Verbindung der Enden des ringförmigen Elementes;
- Figur 5: verdeutlicht eine Ausführung eines ringförmigen Elementes in Form eines mehrlagigen Bandes;
- Figuren 6a bis 6c: verdeutlichen die Ausführung eines ringförmigen Elementes in Form einer O-Ringdichtung mit zugeordnetem Stützring in Verteilernut unterschiedlichen Querschnittes sowie dessen Funktionsweise;
- Figur 7: zeigt eine weitere Ausführung eines erfindungsgemäß gestalteten Schmiermittelversorgungssystems einer Profilverbindung;
- Figuren 8a und 8b: verdeutlichen weitere Ausführungen des Verteilerelementes;
- Figur 9: verdeutlicht eine Ausführung eines erfindungsgemäß gestalteten Schmiermittelversorgungssystems einer Profilverbindung, wobei die Verteilernut im inneren Element der Profilverbindung angeordnet ist.

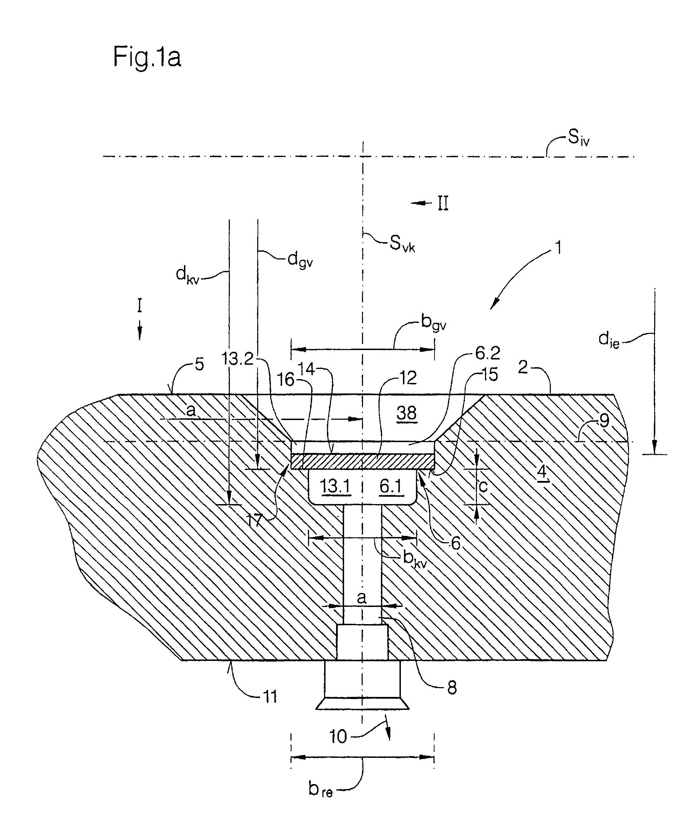

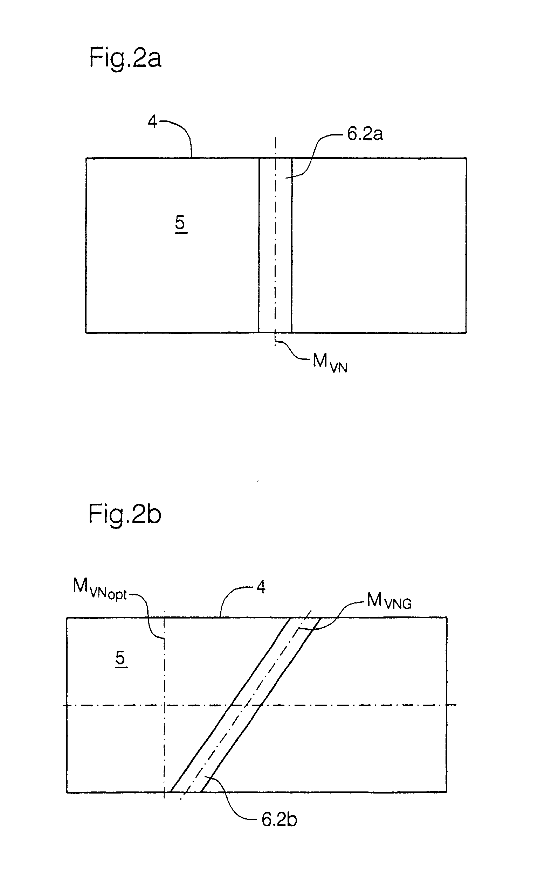

Die Figur 1a verdeutlicht anhand eines Axialschnittes eine vorteilhafte Ausgestaltung eines erfindungsgemäß ausgeführten Schmiermittelsystems 1 für eine Profilverbindung 2 von einer Welle 3 und einer Nabe 4. Die Welle 3 bildet hier ein inneres Element der Profilverbindung und die Nabe 4 ein äußeres Element der Profilverbindung 2. Die Profilverbindung 2 ist im dargestellten Fall als Keilwellenverbindung ausgeführt. Das Schmiermittelsystem 1 umfaßt eine im Bereich des Innenumfanges 5 der Nabe 4 in Umfangsrichtung der Nabe 4 verlaufende Verteilernut 6. Die Verteilernut 6 ist mit dem aufgrund der Einarbeitung der Nut in die Profile der Nabe gebildeten Raum 38, welcher auch bei Ineinandergreifen der Profile von Welle 3 und Nabe 4 unbedeckt verbleibt, und darüber mit den durch das Spiel der einzelnen Profile der Profilverbindung zwischen Welle 3 und Nabe 4 entstehenden Zwischenräume 7 gekoppelt. Die Verteilernut 6 ist im Profilgrund 9 der Nabe 4 eingearbeitet. Diese ist über wenigstens einen Schmiermittelversorgungskanal 8 mit einer an diesen ankoppelbaren und hier im Einzelnen nicht dargestellte Schmiermittelversorgungsquelle 10 verbindbar, Der Schmiermittelversorgungskanal 8 erstreckt sich dabei in radialer Richtung von der Verteilernut 6 zum Außenumfang 11 der Nabe 4. Vorzugsweise ist der Schmiermittelversorgungskanal 8 direkt in radialer Richtung, d.h. senkrecht zur Symmetrieachse S_{N} der Nabe 4 ausgebildet. In diesem Fall verläuft die Symmetrieachse S_{VK} des Schmiermittelversorgungskanales 8 bei Projizierung mit der Symmetrieachse S_{N} in eine gemeinsame Ebene senkrecht zu dieser. Denkbar ist jedoch auch eine geneigte Ausführung zu einer Verbindungslinie zwischen dem Außenumfang 11 der Nabe zu deren Symmetrielinie S_{N}.
In Analogie ist die Verteilernut 6 vorzugsweise direkt in Umfangsrichtung der Nabe 4 angeordnet, d.h. einem Querschnitt, welcher in Einbaulage durch einen Profilschnitt durch die Nabe 4 auf einer konstanten axialen Abmessung a von den vorzugsweise parallel zueinander verlaufenden Seitenflächen der Nabe 4 bildbar ist, zugeordnet. Dies bedeutet, daß die Mittelinie M_{VNopt} der Verteilernut 6 bei Projizierung mit der Symmetrieachse S_{N} der Nabe 4 in eine gemeinsame Ebene senkrecht zu dieser verläuft. Die Figur 2a verdeutlicht dabei eine Ansicht I entsprechend der Figur 1a auf die Innenfläche 5 der Nabe 4 im aufgeklappten Zustand, Die Verteilernut ist mit 6.2a bezeichnet.

Es ist jedoch auch denkbar, die Verteilernut 6 in Umfangsrichtung geneigt gegenüber der optimalen Mittellinie M_{VNopt} für die Verteilernut anzuordnen.
Eine derartige Ausführung ist in einer Ansicht auf die Innenfläche 5 der Nabe 4 gemäß der Figur 2b dargestellt. Die Mittellinie der Verteilernut, hier mit 6.2b bezeichnet, ist mit M_{VNG} bezeichnet.

Die im Profilgrund 9 eingearbeitete Verteilernut 6 ist im dargestellten Fall in zwei Verteiterteilnuten unterteilbar, eine erste Verteilerteilnut 6.1, welche auch als kleine Verteilernut bezeichnet wird und die in radialer Richtung auf einem größeren Durchmesser d_{kV} als die zweite Verteilernut 6.2, die auch als große Verteilernut bezeichnet wird und auf einem geringeren Durchmesser d_{gV} angeordnet. Die erste Verteilernut 6.1 weist eine geringere axiale Erstreckung, d.h. eine geringere Breite b_{kV}, als die zweite Verteilernut 6.2 mit der Breite b_{gV} auf. In der Verteilernut 6 ist ein ringförmiges Element 12 angeordnet. Dieses dient der Unterteilung der Verteilernut 6 in zwei Teilbereiche 13, einen ersten Teilbereich 13.1 und einen zweiten Teilbereich 13.2. Der erste Teilbereich 13.1 ist auf einem größeren Durchmesser, d.h. in radialer Richtung betrachtet, weiter außen als der zweite Teilbereich 13.2 angeordnet. Der erste Teilbereich 13.1 wird daher auch als äußerer Teilbereich bezeichnet, während der zweite Teilbereich 13.2 auch als innerer Teilbereich bezeichnet werden kann. Die Größe des ersten Teilbereiches 13.1 bzw. dessen radiale Erstreckung c wird im konkreten Fall durch die Tiefe der kleinen Verteilernut 6.1 in radialer Richtung bestimmt. Der zweite Teilbereich 13.2, d.h. der innere Teilbereich, wird durch die Abmessungen der großen Verteilernut 6.2, d.h. des zweiten Nutteilbereiches, unter Abzug der Querschnittsfläche A des ringförmigen Elementes 12 bestimmt. Das ringförmige Element 12, welches im Normalzustand eine im wesentlichen auf einem bestimmten Durchmesser d_{rE} verlaufende geschlossene Innenfläche 14 bildet, welche in Umfangsrichtung verläuft und sozusagen auf einem größeren Durchmesser die Welle 4 umschließt, ist vorzugsweise derart ausgebildet, daß dieses in einem Zustand, in dem keine Schmiermittelversorgung, d.h. keine Neuzufuhr von Schmiermittel, erfolgen soll, den ersten Teilbereich 13.1 gegenüber dem zweiten Teilbereich abdichtet. Dies wird durch eine entsprechende Passung zwischen der Breitenabmessung b_{gV} der großen Verteilernut gegenüber der Breitenabmessung b_{rE} des ringförmigen Elementes 12 erzielt, Eine andere Möglichkeit, welche auch für sich allein realisiert werden kann, besteht darin, daß lediglich das ringförmige Element 12 in einem Teilbereich seiner Außenfläche 15 an der Übergangsfläche von der kleinen Verteilernut 13.1 zur großen Verteilernut 13.2 anliegt. Die letztgenannte Ausführung erfolgt vor allem dann, wenn das ringförmige Element 12 eine entsprechende Steifigkeit aufweist, die auf jeden Fall ein Anliegen wenigstens eines Teilbereiches der Außenfläche 15 des ringförmigen Elementes 12 in Einbaulage ermöglicht. Dies ist in der Regel dann der Fall, wenn das ringförmige Element 12 mit Übermaß in die Verteilernut 6, insbesondere die große Verteilernut 6.2 eingebracht wird.

Bei Zuführung von Schmiermittel mittels einer Schmiermittelversorgungsquelle 10, welche an den Versorgungskanal 8 anschließbar ist, gelangt das Schmiermittel in den ersten Teilbereich 13.1, in diesem Fall die kleine Verteilernut 6.1. Das Schmiermittel verteilt sich dabei in Umfangsrichtung des ringförmigen Elementes, wobei ein Druck im kleinen Verteilerkanal 6.1 aufgebaut wird. Solange zwischen diesem erzeugten Druck und der durch die Steifigkeit des ringförmigen Elementes 12 erzeugten Gegenkraft noch nicht im Gleichgewicht stehen, d.h. der Druck bzw. die durch den Druck auf die Außenfläche 15 ausgeübte Kraft kleiner oder gleich der vom ringförmigen Element 12 entgegengesetzt ausgerichteten Kraft ist, gelangt noch kein Schmiermittel in die große Verteilernut 13.2. Bei Größerwerden des Druckes im kleinen Verteilerkanal 6.1 wird das ringförmige Element 12 beispielsweise leicht elastisch verformt und die Dichtwirkung zwischen dem ringförmigen Element 12 und der Anschlagfläche 16, d.h. dem ersten Teilbereich 13.1 und dem zweiten Teilbereich 13.2, aufgehoben. Es bildet sich dann ein geringer Spalt 17 bzw. 18 aus. Dieser bewirkt, daß das Schmiermittel vom ersten Teilbereich 13.1 zum zweiten Teilbereich 13.2 in stark dosierter Form austreten kann. Dadurch, daß das Schmiermittel nicht sofort von der kleinen Verteilernut 13.1 zur großen Verteilernut 13.2 ohne Strömungswiderstand gelangen kann, ist es gezwungen, sich in Umfangsrichtung an der Außenfläche 15 des ringförmigen Elementes 12 vorerst zu verteilen, bis der entsprechende erhöhte Druck erreicht wird.

Der sich ausbildende Spalt 17, egal in welcher Form, weist einen wesentlich geringeren Querschnitt als der Schmiermittelzulaufquerschnitt Q im Versorgungskanal 8 auf. Das ringförmige Element 12 wird somit zur Erzeugung eines Widerstandes für das Schmiermittel genutzt, um dieses zuerst zur Verteilung in Umfangsrichtung in der kleinen Verteilernut 6.1 zu zwingen und erst nach entsprechender Verteilung in Umfangsrichtung einen Austritt bzw. Übertritt in die große Verteilernut 6.2 zuzulassen.

Vorzugsweise wird jedoch das ringförmige Element 12 immer mit einer entsprechenden Breitentoleranz in bezug auf die Breite b_{gV} der großen Verteilernut 6.2 ausgebildet.

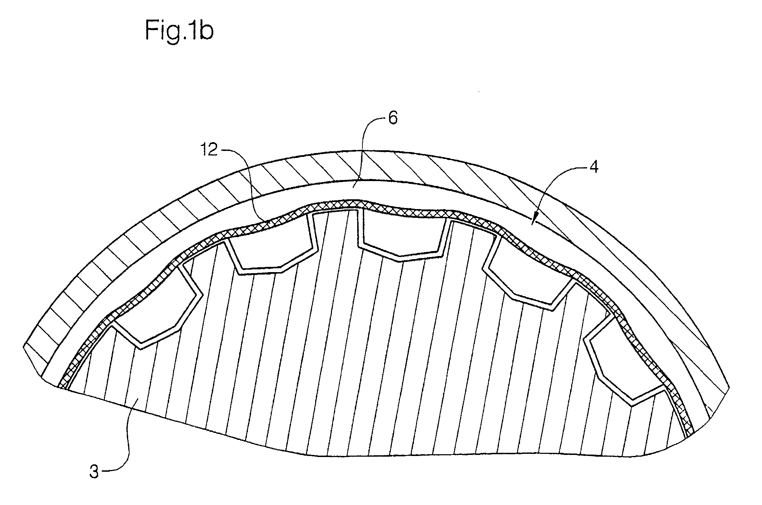

Die Figur 1b verdeutlicht einen Ausschnitt auf eine Ansicht II entsprechend der Figur 1a auf den Querschnitt der Nabe 4, und zwar im Zustand der Schmiermittelzufuhr. Daraus wird ersichtlich, wie die Form des ringförmigen Elementes in Umfangsrichtung unter dem Druckeinfluß in der Verteilernut verändert wird und damit das Schmiermittel vom ersten Teilbereich 13.1 in den zweiten Teilbereich 13.2 und damit in die Zwischenräume 7, welche durch das Spiel zwischen den einzelnen Profilen, insbesondere den Profilaußenflächen, bestimmt wird. Aufgrund der Tatsache, daß mit der erfindungsgemäßen Ausführung das Schmiermittel vor dem Übertritt in den Zwischenraum 7 gezwungen ist, über einen Teil des Außenumfanges 15 des ringförmigen Elementes 12 zu verlaufen, kann bereits bei Profilverbindungen mit geringem Durchmesser ein einziger Schmiermittelversorgungskanal 8 ausreichend sein. Bei Profilverbindungen mit größerem Durchmesser, wie sie vor allem bei Gelenkwellen mit axialem Längenausgleich zum Einsatz kommen, werden vorzugsweise mehrere über den Umfang verteilte Schmiermittelversorgungskanäle 8 angeordnet. Diese können in unterschiedlichen Abständen zueinander oder aber in gleichen Abständen über den Umfang verteilt angeordnet werden.

Vorzugsweise sind des weiteren die Querschnittsübergänge an den Verteilernuten, insbesondere der kleinen Verteilernut 6.1 sowie der großen Verteilernut 6.2, gerundet ausgeführt, um die Kerbwirkung zu reduzieren.

Die Figuren 2a und 2b verdeutlichen die Möglichkeiten der Anordnung der Verteilernut 6, hier mit 6.1 für die Ausführung entsprechend der Figur 1a und mit 6.2 für eine alternative Ausführungsform in der Figur 2b dargestellt. Die von der Herstellung einfachste und kostengünstigste Variante besteht darin, die Verteilernut in Umfangsrichtung einem bestimmten Querschnitt zuzuordnen. Dies entspricht der Ansicht auf den Innenumfang 5 entsprechend der Figur 2a. Die Figur 2b verdeutlicht eine alternative Ausführungsform, wobei jedoch darauf zu achten ist, daß der Schmiermittelweg zwischen dem ringförmigen Element 12 und dem äußeren Teilbereich 13.1 der Verteilernut 6 gegenüber der Ausführung in der Figur 2a vergrößert ist.

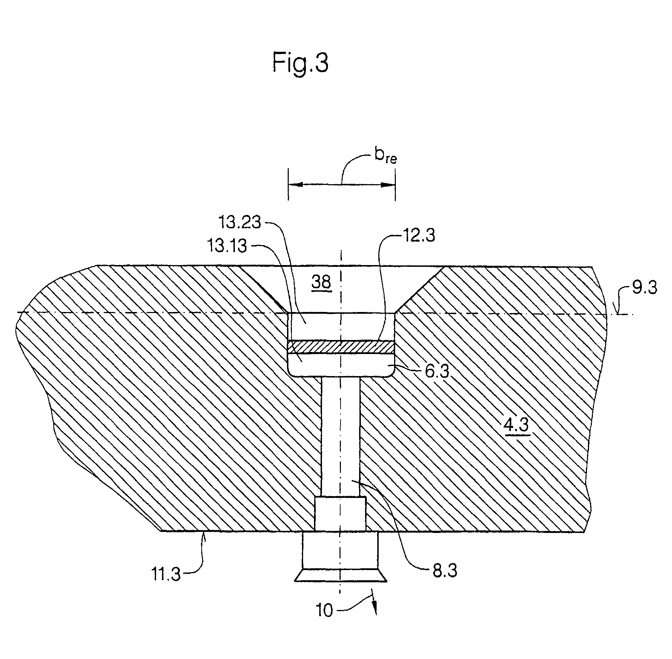

Die Figur 3 verdeutlicht eine weitere alternative Ausführungsform der erfindungsgemäßen Lösung, welche sich durch Einfachheit und eine kostengünstige Fertigung auszeichnet. Der Grundaufbau entspricht dabei der Lösung entsprechend der Figur 1a, weshalb für gleiche Elemente die gleichen Bezugszeichen verwendet werden. Die Figur 3 verdeutlicht eine Ansicht in einem Axialschnitt auf eine Profilverbindung 2.3 umfassend eine Welle 3.3 und eine Nabe 4.3. In den Profilgrund 9.3 ist eine Verteilernut 6.3 eingearbeitet, welche über ihre Tiefe c3 einen konstanten Querschnitt umfaßt. Der Verteilernut 6.3 ist wenigstens ein Schmiermittelversorgungskanal 8.3 zugeordnet, der sich in Richtung des Außenumfanges 11.3 der Nabe 4.3 erstreckt und mit einer Schmiermittelversorgungsquelle 10 bei Bedarf koppelbar ist. Ein ringförmiges Element 12.3 ist mit entsprechender Passung in die ringförmige Verteilernut 6,3 eingefügt und dient der Bildung eines ersten Teilbereiches 13.13, welcher als äußerer Teilbereich bezeichnet wird, und eines zweiten Teilbereiches 13.23, welcher als innerer Teilbereich benannt wird. Für die Ausgestaltung und Auslegung des ringförmigen Elementes 12.3 gibt es eine Vielzahl von Möglichkeiten. In einem ersten Fall kann das ringförmige Element 12.3 in axialer Richtung, d.h. über die Breite b_{rE} steif ausgeführt sein, jedoch in radialer Richtung elastisch. Dies führt dazu, daß unter Druckbeaufschlagung der Ring über seine Breite b_{rE} eine Biegung erfährt und dadurch im Bereich seiner seitlichen Ränder und im Zusammenwirken mit den Innenwänden der Verteilernut 6.3 einen Spalt für das Schmiermittel bildet, welches aus dem ersten Teilbereich 13.13 in den zweiten Teilbereich 13.23 überströmt. Die Spaltgröße bestimmt dabei die Durchflußmenge.

Eine andere hier nicht dargestellte Möglichkeit besteht darin, bei einer Ausführung entsprechend der Figur 1a ein ringförmiges Element in Form eines Bandes vorzusehen, welches beispielsweise auch in Form eines elastischen Bandes ausgeführt sein kann und durch entsprechende Befestigung an den Innenwänden der Nut, welche auch nur teilweise erfolgen kann, eine Abdichtwirkung erzielt, wobei jedoch die Bereiche der Zahnlücken, d.h. die Zwischenräume 38 aufgrund der Nut in den Profilvorsprüngen der Nabe 4.3 freigehalten werden von einer derartigen Verbindung.

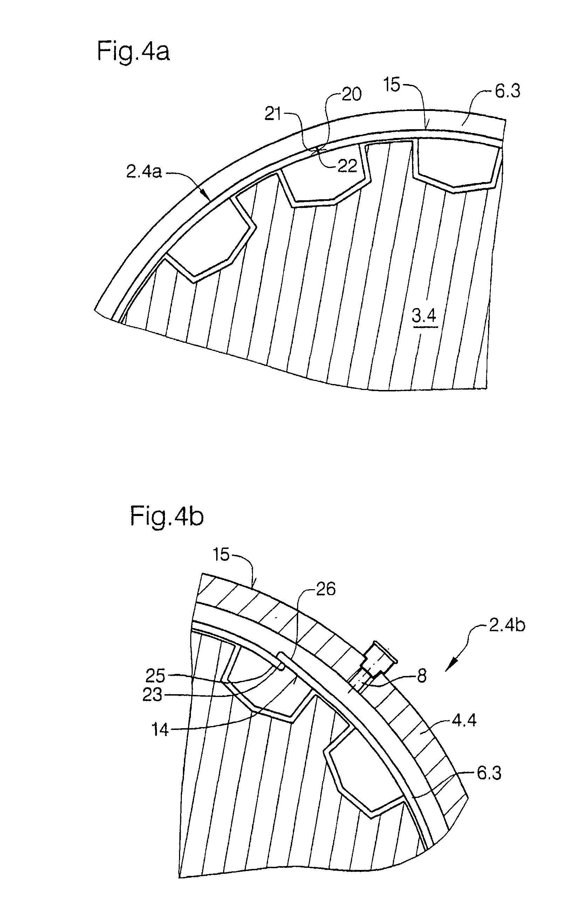

Die Figuren 4a und 4b verdeutlichen zwei Möglichkeiten der Gestaltung der Verbindung der Enden des ringförmigen Elementes 12 in einer Ansicht auf den Querschnitt der Profilverbindung 2.4a bzw. 2.4b. Die Figur 4a verdeutlicht eine Verbindung in Form eines Stoßes 20, wobei die beiden Enden mit den zueinander weisenden Flächen 21 und 22 aufeinanderstoßen und mittels einer Klebe- oder Vergußmasse miteinander unlösbar verbunden werden. Die Figur 4b zeigt eine andere Möglichkeit in Form einer Überlappung 23, wobei die beiden Endbereiche 25 bzw. 26 des ringförmigen Elementes 12 im Bereich ihrer Außenfläche 15 oder Innenfläche 14 zum Anliegen kommen. Die Überlappung 23 ist dabei vorzugsweise im Bereich des Zwischenraumes 38, welcher durch die Einarbeitung der Nut 6.3 in die Profilvorsprünge der Nabe 4.4 in Form einer Zahnlücke vorliegt, vorgesehen.

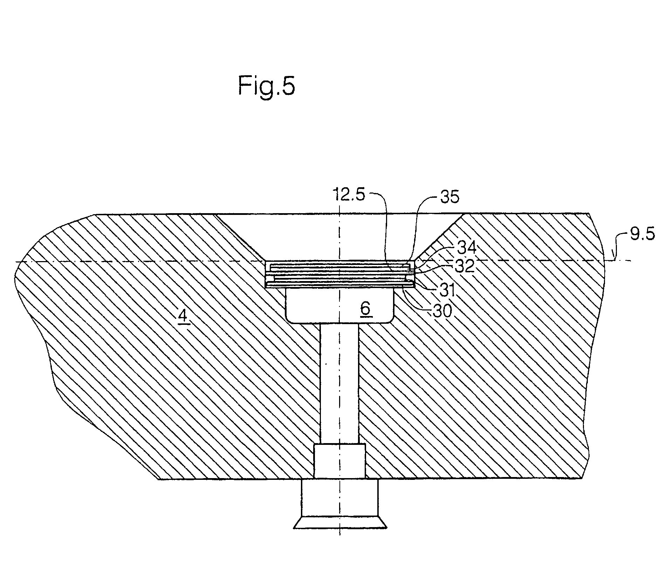

Die Figur 5 verdeutlicht eine weitere Ausführung eines ringförmigen Elementes in Form eines mehrlagigen Bandes 12.5. Die einzelnen Lagen sind dabei in radialer Richtung übereinander angeordnet und mit 30 bis 35 bezeichnet. Zwischen diesen besteht eine Gleitverbindung. Die Gleitverbindung ermöglicht eine Relativbewegung der einzelnen Lagen 30 bis 35 in axialer Richtung gegeneinander. Durch die unterschiedlichen Stellungen in axialer Richtung kann mittels diesem Element 12.5 eine Dichtwirkung erzielt werden und bei Druckbeaufschlagung eine Freigabe eines entsprechenden Spaltes.

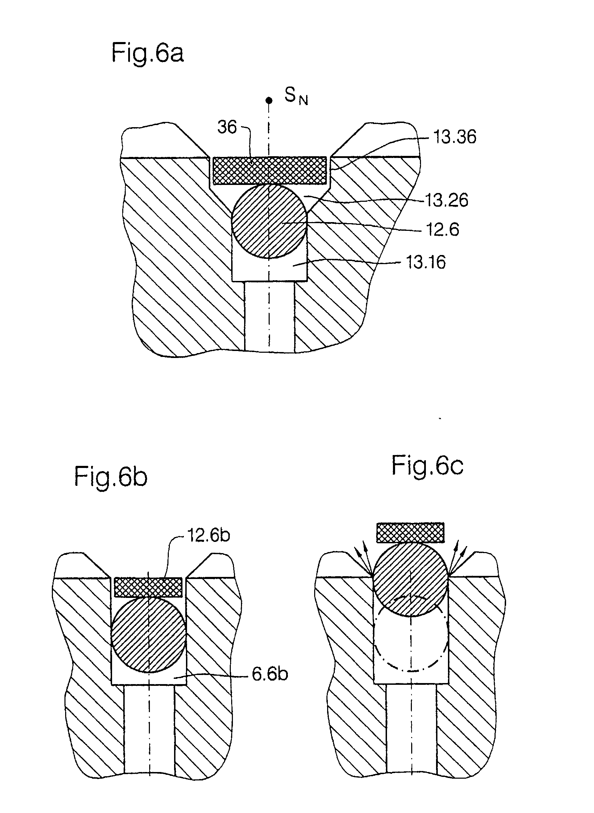

Die Figuren 6a bis 6c verdeutlichen eine weitere Ausführung des verteilerelementes in Form eines ringförmigen Elementes 12.6, umfassend ein Dichtelement 40 a bzw. 40b in Form eines O-Ringes und ein Stützelement 36a bzw. 36b. Dabei übernimmt das Dichtelement 40a bzw. 40b in Form des O-Ringes die Unterteilung der Verteilernut 6 in einen ersten Teilbereich 13.16 und in einen zweiten Teilbereich 13.26. Im dargestellten Fall ist ein weiterer dritter Teilbereich 13.36 vorgesehen. Da der O-Ring 40.a bzw. 40.b relativ elastisch ausgeführt ist, ist diesem zur Führung ein Stützring 36 zugeordnet, welcher in radialer Richtung dem O-Ring in Richtung zur Symmetrieachse der Nabe S_{N} nachgeschaltet ist. Der Stützring 36 hat dabei vor allem Führungsaufgaben zu übernehmen.

Die Figur 6b verdeutlicht eine Anordnung eines ringförmigen Elementes 12.6b, umfassend ein Dichtelement 40b und ein Stützelement 36b entsprechend der Figur 6a in einer Verteilernut 6.6b mit in radialer Richtung konstanten Querschnitt. In der Figur 5c ist die dazugehörige Funktionsweise verdeutlicht. Daraus ist ersichtlich, daß aufgrund des bei Schmiermittelzufuhr sich einstellenden Druckes der O-Ring 40b aufgrund seiner Elastizität einer Verformung im Bereich der Profillücke erfährt, die einen Übertritt des Schmiermittels in dosierter Form ermöglicht.

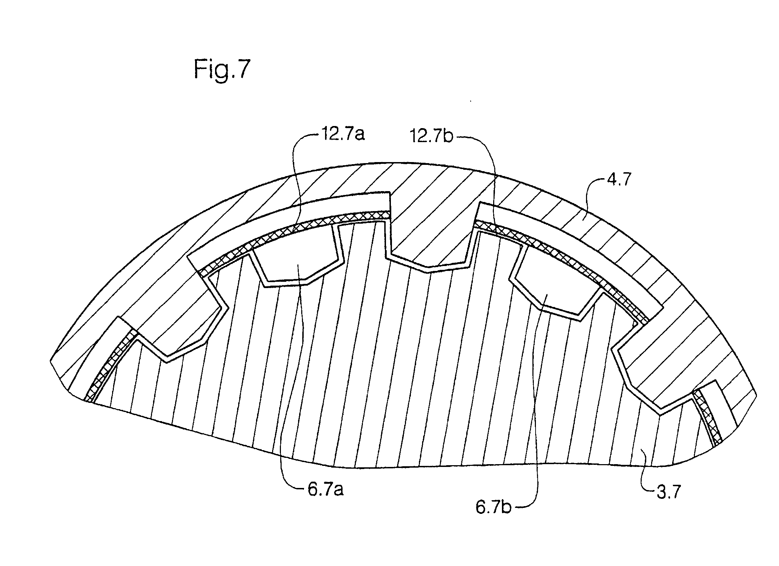

Die Figur 7 verdeutlicht beispielhaft schematisch vereinfacht eine Ausführung mit mehreren Verteilernuten 6.7a, 6.7b. Diese erstrecken sich jeweils über einen Teilbereich des Umfanges in Umfangsrichtung einem bestimmten Querschnitt der Nabe 4.7 zugeordnet und hintereinander angeordnet. Die beiden Verteilernuten 6.7a und 6.7b sind durch den Profilvorsprung 41a der Nabe 4,7 voneinander getrennt. In der Verteilernut 6.7a bzw. 6.7b sind jeweils ein Verteilerelement 12.7a bzw. 12.7b angeordnet. Die Funktionsweise und der Aufbau der Verteilerelemente 12.7a bzw. 12.7b kann dabei den in den Fig. 1-6 und 8 beschriebenen Ausführungen entsprechen. Die Festlegung der Anzahl und der Länge der Verteilernuten, deren Gestaltung und die Auswahl der Verteilerelemente sowie deren Gestaltung liegt im Ermessen des Fachmannes.

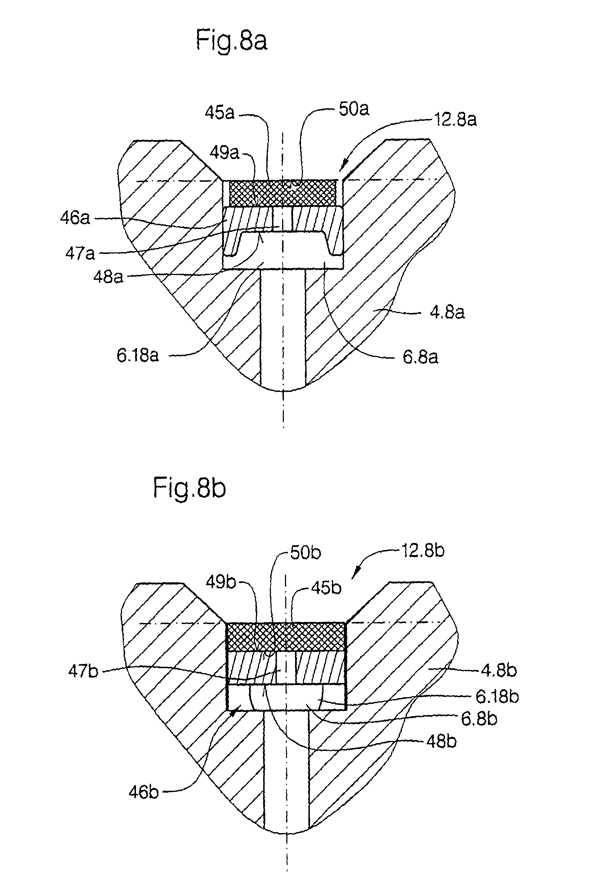

Die Fig. 8a und 8b verdeutlichen in einem Ausschnitt aus einem Axialschnitt eine weitere Ausführung eines Verteilerelemenetes 12.8 in Form einer Baueinheit, umfassend jeweils ein Stützelement 45a bzw. 45.b und ein Dichtelement 46a bzw. 46b in einer Verteilernut 6.8a bzw. 6.8b. Die Verteilernut weist im dargestellten Fall einen konstanten Querschnitt auf. Denkbar ist jedoch auch eine Ausführung mit mehreren Querschnitten unterschiedlicher Abmessungen bzw. entsprechend den Figuren 1a oder 6a. In der Figur 8a wird die Dichtwirkung aufgrund der leicht konischen Gestaltung des Dichtelementes 46a, hier aufgrund des U-förmigen Querschnittes des Dichtelementes 46a erzielt. Denkbar ist jedoch auch eine Ausführung entsprechend Figur 8b, bei welcher das Dichtelement mit entsprechender Passung, beispielsweise einer Übergangs- oder Presspassung, vorzugsweise jedoch mit einem Haftsitz in die Verteilernut 6.8b eingepaßt ist. Die Dichtelemente 46a bzw. 46b weisen wenigstens eine Durchlaßöffnung 47a bzw. 47b auf, welche sich vom Außenumfang 48a bzw. 48b des Dichtelementes 46a bzw. 46b zum Innenunmfang 49a bzw, 49b des Dichtelementes erstreckt. Das Stützelement 45a bzw. 45b und das Dichtelement 46a bzw. 46b haben wenigstens über einen Teil ihrer Außenfläche 50a bzw. 50b bzw. ihrerer Innenfläche 49a bzw. 49b in Einbaulage betrachtet Kontakt. Die Außenfläche 50a bzw. 50b des Stürtzringes 45a bzw. 45b ist mit einer bestimmten Rauhigkeit versehen, welche beispielsweise größer ist, als die Rauhigkeit der Innenfläche 49a bzw. 49b des Dichtelementes 46a bzw. 46b. Es besteht auch die Möglichkeit, die Rauhigkeit der Innenfläche 49a bzw. 49b des Dichtelementes größer als die der Außenfläche 50a bzw. 50b des Stützelementes 45a bzw. 45b oder aber auch gleich zu gestalten. Bei Befüllung mit Schmiermittel läßt die rauhe Oberfläche zuerst mit wenig Wiederstand die Luft ausströmen. Ist die Verteilemut 6.18a bzw. 6.18b voller Fett, wirkt die Kontaktstelle zwischen dem Dichtelement und dem Stützelement mit seiner rauhen Oberfläche wie eine kleine Leckstelle. Der erhöhte Widerstand durch die hohe Viskositätvon Fett läßt den Druck in der Verteilernut ansteigen. Mit der Größe und/oder der Anzahl der Durchlaßöffnungen kann das Leck vergrößert oder verkleinert werden.

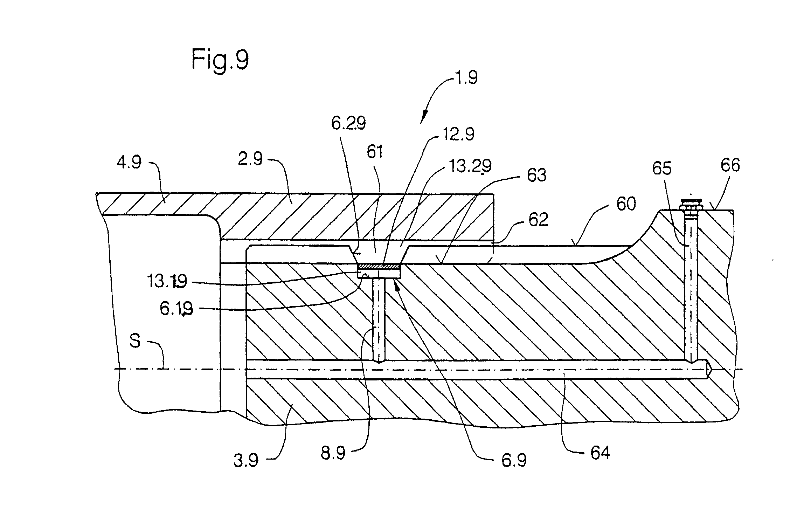

Die Figur 9 verdeutlicht anhand eines Axialschnittes eine weitere vorteilhafte Ausgestaltung eines erfindungsgemäß ausgeführten Schmiermittelsystems 1.9 für eine Profilverbindung 2.9 von einer Welle 3.9 und einer Nabe 4.9. Die Welle 3.9 bildet ebenfalls ein inneres Element der Profilverbindung und die Nabe 4.9 ein äußeres Element der Profilverbindung 2. Die Profilverbindung 2.9 ist als Keilwellenverbindung ausgeführt. Das Schmiermittelsystem 1.9 umfaßt eine im Bereich des Außenumfanges 60 der Welle 3.9 in Umfangsrichtung der Welle verlaufende Verteilernut 6.9. Die Verteilernut 6.9 ist mit dem aufgrund der Einarbeitung der Verteilernut in die Profile der Welle 3.9 gebildeten Raum 61, welcher auch bei Ineinandergreifen der Profile von Welle 3.9 und Nabe 4.9 unbedeckt verbleibt, und darüber mit den durch das Spiel der einzelnen Profile der Profilverbindung 2.9 zwischen der Welle 3.9 und der Nabe 4.9 entstehenden Zwischenräume 62 gekoppelt. Die Verteilernut 6.9 ist im Profilgrund 63 der Welle 3.9 eingearbeitet. Diese ist über wenigstens einen Schmiermittelversorgungskanal 8.9 mit einer an diese ankoppelbare und hier im einzelnen nicht dargestellte Schmiermittelversorgungsquelle 10 koppelbar. Die Kopplung zwischen Schmiermittelversorgungskanal 8.9 und Schmiermittelversorgungsquelle erfolgt über eine zentrale Schmiermittelversorgungsleitung 64, welche sich durch das innere Element, d. h. die Welle 3.9, erstreckt. Die Schmiermittelversorgungsleitung 64 ist dabei vorzugsweise im Bereich der Symmetrieachse S des inneren Elementes 3.9 angeordnet. Denkbar sind jedoch auch Ausführungen, welche eine Anordnung von einer Mehrzahl von Schmiermittelversorgungsleitungen 64 in gleichmäßigen Abständen in Umfangsrichtung auf einen bestimmten Durchmesser des inneren Elementes beinhalten, um im Betrieb der Gelenkwelle keine Unwuchten bedingt durch das Schmiermittelversorgungssystem zu erzeugen. Im dargestellten Fall ist die zentrale Schmiermittelversorgungsleitung 64 über eine mit diese koppelbare Schmiermittelleitung 65, welche sich von der zentralen Schmiermittelversorgungsleitung 64 in radialer Richtung zum Außenumfang 66 der Welle 3.9 erstreckt, mit Schmiermittel versorgbar.

Die in den Profilgrund 63 eingearbeitete Verteilernut 6.9 ist im dargestellten Fall in zwei Verteilernuten unterteilbar, eine erste Verteilernut 6.1,9, welche auch als kleine Verteilernut bezeichnet wird, und die in radialer Richtung auf einen geringeren Durchmesser d als die zweite Verteilernut 6.2.9, welche auch als große Verteilernut bezeichnet wird, und die auf einem größeren Durchmesser d als die erste Verteilernut angeordnet ist. Die erste Verteilernut 6.1.9 weist eine geringere axiale Erstreckung, d. h. geringere Breite b, als die zweite Verteilernut 6.2.9 auf. Das Verteilerelement, welches als ringförmiges Element ausgeführt ist, ist mit 12.9 bezeichnet und in der Verteilernut 6.9 angeordnet. Diese dient der Unterteilung der Verteilernut 6 in zwei Teilbereiche 13.9, einen ersten Teilbereich 13.1.9 und einen zweiten Teilbereich 13.2.9. Der erste Teilbereich 13.1.9 ist dabei auf einem kleineren Durchmesser in radialer Richtung betrachtet als der zweite Teilbereich 13.2.9 angeordnet. Der erste Teilbereich wird dabei als innerer Teilbereich bezeichnet, während der zweite Teilbereich 13.2.9 auch als äußerer Teilbereich bezeichnet werden kann. Die Erstreckung des ersten Teilbereiches 13.1.9 in radialer Richtung wird durch die Tiefe der kleinen Verteilernut 6.1.9 minus der Dicke des Verteilerelementes 12.9 bestimmt. Der zweite Teilbereich 13.2.9, d. h. der äußere Teilbereich, wird durch die Abmessungen der großen Verteilernut 6.2.9 in radialer Richtung bestimmt. Die Funktionsweise des Verteilerelementes 12.9 entspricht der in den vorangegangenen Figuren 1 bis 8 beschriebenen. Auch die Aussagen betreffend der Ausgestaltung des Verteilerelementes 12.9, insbesondere die Ausführung in Umfangsrichtung sowie in radialer Richtung und der Verteilernut sowie der Kopplung mit zusätzlichen Dichtelementen, gelten in Analogie für diese Ausführung gemäß Figur 9.

Bei den Ausführungen entsprechend der Fig. 1 bis 9 ist beispielhaft jeweils das äußere Element der Profilverbindung als Nabe ausgeführt. Denkbar ist es auch, dem äußeren Element der Profilverbindung die Funktion der Welle zuzuordnen.

## Patentansprüche

1. Schmiermittelversorgungssystem (1) für eine Profilverbindung (2) einer Welle (3) und einer Nabe (4) mit axialer Längsverschieblichkeit
1.1. ein erstes außeres Element der Profilverbindung - Welle oder Nabe - umschließt ein anderes zweites inneres Element der Profilverbindung - Nabe oder Welle - wenigstens teilweise in Umfangsrichtung;
1.2 im Bereich des Profilgrundes (9) am Innenumfang (5) des äußeren Elementes (4) der Profilverbindung (2) ist wenigstens eine, sich über wenigstens einen Teil des Innenumfanges (5) in Umfangsrichtung erstreckende Verteilernut (6) angeordnet;
1.3 die Verteilernut (6) ist mit wenigstens einem, sich zum Außenumfang des äußeren Elementes (4) der Profilverbindung (2) erstreckenden Schmiermittelversorgungskanal (8) gekoppelt;
gekennzeichent durch die folgenden Merkmale:
1.4 in der Verteilernut (6) ist ein sich über die Länge der Verteilernut (6) in Umfangsrichtung erstreckendes Verteilerelement (12) angeordnet;
1.5 das Verteilerelement (12) unterteilt die Verteilernut in einen ersten radial außen liegenden und einen zweiten radial innen liegenden Teilbereich (13.1, 13.2);
1.6 das Verteilerelement (12) und die Verteilernut (6) sind derart gestaltet und ausgelegt, daß diese in ihrem Zusammenwirken eine Mehrzahl von Ventilstellen zwischen dem ersten (13.1) und dem zweiten Teilbereich (13.2) der Verteilernut (6) bilden.

2. Schmiermittelversorgungssystem (1) für eine Profilverbindung (2) einer Welle (3) und einer Nabe (4) mit axialer Längsverschieblichkeit
2.1. ein erstes außeres Element der Profilverbindung - Welle oder Nabe - umschließt ein anderes zweites inneres Element der Profilverbindung - Nabe oder Welle - wenigstens teilweise in Umfangsrichtung;
2.2 im Bereich des Profilgrundes (63) am Außenumfang des inneren Elementes (3.9) der Profilverbindung (2.9) ist wenigstens eine, sich über wenigstens einen Teil des Außenumfanges (60) in Umfangsrichtung erstreckende Verteilernut (6.9) angeordnet;
2.3 die Verteilernut (6.9) ist mit wenigstens einem, sich durch das Innere des inneren Elementes (3.9) der Profilverbindung (2.9) erstreckenden Schmiermittelversorgungskanal (64) gekoppelt;
gekennzeichent durch die folgenden Merkmale:
2.4 in der Verteilernut (6.9) ist ein sich über die Länge der Verteilernut (6.9) in Umfangsrichtung erstreckendes Verteilerelement (12.9) angeordnet;
2.5 das Verteilerelement (12.9) unterteilt die Verteilernut in einen ersten radial außen liegenden und einen zweiten radial innen liegenden Teilbereich (13.1.9, 13.2.9);
2.6 das Verteilerelement (12.9) und die Verteilernut (6.9) sind derart gestaltet und ausgelegt, daß diese in ihrem Zusammenwirken eine Mehrzahl von Ventilstellen zwischen dem ersteh (13.1.9) und dem zweiten Teilbereich (13.2.9) der Verteilernut (6.9) bilden.

3. Schmiermittelversorgungssystem nach Anspruch 1 oder 2, **gekennzeichnet durch** die folgenden Merkmale:
3.1 es sind eine Mehrzahl von sich in Umfangsrichtung über wenigstens eine Teil des Umfanges erstreckenden und in Umfangsrichtung hintereinander angeordneten Verteilernuten (6.7a, 6.7b) vorgesehen;
3.2 die Verteilernuten (6.7a, 6.7b) sind frei von einer Kopplung untereinander.

4. Schmiermittelversorgungssystem nach Anspruch 3, **dadurch gekennzeichnet, daß** die einzelnen in Umfangsrichtung hintereinander angeordneten Verteilernuten (6.7a, 6.7b) jeweils nur durch einen Profilvorsprung am äußeren Element (4.7) der Profilverbindung (2.7) bei Anordnung der Verteilernut (6) am äußeren Element (4) oder nur durch einen Profilvorsprung am inneren Element (3) der Profilverbindung (2) bei Anordnung der Verteilernut am inneren Element voneinander getrennt sind.

5. Schmiermittelversorgungssystem nach Anspruch 1 oder 2, **gekennzeichnet durch** die folgenden Merkmale:
5.1 die Verteilernut (6) erstreckt sich in Umfangsrichtung um den gesamten Umfang;
5.2 das Verteilerelement (12) ist als ringförmiges Verteilerelement ausgeführt.

6. Schmiermittelversorgungssystem nach Anspruch 5, **gekennzeichnet durch** die folgenden Merkmale:
6.1 die Verteilernut ist
- bei Anordnung im äußeren Element (4) der Profilverbindung (2) in einer Ansicht auf den Querschnitt des äußeren Elementes (4) der Profilverbindung (2) betrachtet, bezüglich einer Vielzahl von in der Querschnittsebene des äußeren Elementes (4) der Profilverbindung (2) liegenden und sich **durch** die Rotationssymmetrieachse der Verteilernut (6) erstreckenden Achsen symmetrisch ausgeführt oder
- bei Anordnung im inneren Element (3.9) der Profilverbindung (2.9) in einer Ansicht auf den Querschnitt des inneren Elementes (3.9) betrachtet, bezüglich einer Vielzahl von in der Querschnittsebene des inneren Elementes (3.9) liegenden und sich **durch** die Rotationssymmetrieachse der Verteilernut (6.9) erstreckenden Achsen symmetrisch ausgeführt;
6.2 die im Querschnitt des äußeren Elementes (4) oder inneren Elementes (3.9) der Profilverbindung (2, 2.9) liegenden Symmetrieachsen der Verteilernut verlaufen senkrecht zur Rotationssysmmetrieachse des äußeren Elementes (4) oder des inneren Elementes (3.9) der Profilverbindung (2 oder 2.9).

7. Schmiermittelversorgungssystem nach einem der Ansprüche 5 oder 6, **dadurch gekennzeichnet, daß** die Verteilernut (6, 6.9) bei Projizierung einer Ansicht auf deren Querschnitt in eine Ebene mit dem Querschnitt des äußeren Elementes (4) oder des inneren Elementes (3.9) der Profilverbindung (2 bzw. 2.9) betrachtet, symmetrisch ausgeführt ist und einen ovalen Querschnitt aufweist.

8. Schmiermittelversorgungssystem nach einem der Ansprüche 1 bis 7, **dadurch gekennzeichnet, daß** der zweite Teilbereich (13.2) wenigstens einen Teil der durch die Einarbeitung der Nut in die Profilvorsprünge des äußeren Elementes (4) der Profilverbindung (2) bei Anordnung der Verteilernut im äußeren Element entstehenden Profillücke in einem Axialschnitt durch das äußere Element (4) der Profilverbindung (2) betrachtet mit umfaßt oder bei Anordnung der Verteilernut im inneren Element (3.9) der zweite Teilbereich (13.2.9) wenigstens einen Teil der durch die Einarbeitung der Nut in die Profilvorsprünge des inneren Elementes (3.9) entstehenden Profillücken in einem Axialschnitt durch das innere Element (3.9) betrachtet mit umfaßt.

9. Schmiermittelversorgungssystem nach einem der Ansprüche 1 bis 8, **gekennzeichnet durch** folgende Merkmale:
9.1 der zweite Teilbereich (13.2) der Verteilernut (6) ist mit Zwischenräumen, welche **durch** Profillücken in den Profilvorsprüngen des äußeren Elementes der Profilverbindung gebildet werden bzw. mit Zwischenräumen, welche **durch** Profillücken in den Profilvorsprüngen des inneren Elementes (3.9) der Profilverbindung (2.9) gebildet werden, gekoppelt;
9.2 die Breite des Zwischenraumes ist größer als die Breite des zweiten Teilbereiches (13.2, 13.2.9).

10. Schmiermittelversorgungssystem nach einem der Ansprüche 1 bis 9, **gekennzeichnet durch** die folgenden Merkmale:
10.1 das Verteilerelement (12, 12.9) ist derart gestaltet und ausgelegt, daß es
10.1.1 bei Schmiermittelzufuhr beide Teilbereiche - erster Teilbereich (13.1, 13.1.9) und zweiter Teilbereich (13.2, 13.1.9) - bis zum Erreichen eines bestimmten vordefinierbaren Druckes im ersten Teilbereich gegeneinander abdichtet
10.1.2 bei Erreichen oder Überschreiten dieses bestimmten Druckes, Übertrittspalten zwischen dem ersten und zweiten Teilbereich (13.1, 13.2, 13.1.9, 13.2.9) freigibt.

11. Schmiermittelversorgungssystem nach Anspruch 10, **dadurch gekennzeichnet, daß** die Übertrittsspalten eine Querschnittsfläche aufweisen, deren Summe << als die Summe der Querschnittsflächen der Schmiermittelversorgungskanäle (8, 64) sind.

12. Schmiermittelversorgungssystem nach Anspruch 11, **dadurch gekennzeichnet, daß** das Verhältnis zwischen der Summe der Querschnittsflächen der Übertrittsspalten zur Summe der Querschnittsflächen der Schmiermittelversorgungskanäle (8, 64) durch Wahl des Materials des Verteilerelementes (12, 12.9) und/oder die Passung zwischen Verteilerelement (12, 12.9) und Verteilernut (6, 6.9) frei festlegbar ist.

13. Schmiermittelversorgungssystem nach einem der Ansprüche 1 bis 12, **dadurch gekennzeichnet, daß** die Verteilernut (6.8a, 6.8b) in radialer Richtung einen im wesentlichen konstanten Querschnitt aufweist.

14. Schmiermittelversorgungssystem nach einem der Ansprüche 1 bis 12, **gekennzeichnet durch** die folgenden Merkmale:
14.1 die Verteilernut (6, 6.9) ist in radialer Richtung in zwei Teilnuten unterteilt - eine erste, in radialer Richtung äußere Teilnut (6.2.9, 6.1) und eine zweite in radialer Richtung innere Teilnut (6.1.9, 6.2);
14.2 die innere Teilnut (6.1.9, 6.2) weist bei Anordnung im äußeren Element in einem Axialschnitt **durch** das äußere Element (4) der Profilverbindung (2) betrachtet einen größeren Querschnitt als die äußere Teilnut (6.2.9, 6.1) auf und bei Anordnung im inneren Element (3.9) in einem Axialschnitt **durch** das innere Element (3.) der Profilverbindung (2.9) betrachtet einen geringeren Querschnitt als die äußere Teilnut (6.2.9) auf.
14.3 das Verteilelement (12) ist in der inneren Teilnut angeordnet.

15. Schmiermittelversorgungsystem nach Anspruch 14, **dadurch gekennzeichnet, daß** das Verteilelement (12.5) am Querschnittsübergang in der inneren Teilnut anliegt.

16. Schmiermittelversorgungssystem nach einem der Ansprüche 10 bis 15, **dadurch gekennzeichnet, daß** die Breite des Verteilerelementes (12, 12.3, 12.4, 12.5, 12.6, 12.7, 12.8, 12.9) derart gewählt ist, daß diese mit der Breite der Verteilernut (6.6, 6.3, 6, 6.9, 6.2a, 6.2b) wenigstens die Toleranz einer Übergangspassung oder eines Preßsitzes aufweist.

17. Schmiermittelversorgungssystem nach einem der Ansprüche 10 bis 16, **dadurch gekennzeichnet, daß** das Verteilerelement (12) in Umfangsrichtung elastisch und über seine Breite steif ausgeführt ist,

18. Schmiermittelversorgungssystem nach einem der Ansprüche 10 bis 17, **dadurch gekennzeichnet, daß** das Verteilerelement (12.5) mehrere Lagen umfaßt.

19. Schmiermittelversorgungssystem nach Anspruch 18, **dadurch gekennzeichnet, daß** die einzelnen Lagen in axialer Richtung gegeneinander verschiebbar ausgeführt sind.

20. Schmiermittelversorgungssystem nach einem der Ansprüche 10 bis 19, **dadurch gekennzeichnet, daß** das Verteilerelement (12, 12.9, 12, 3, 12.6, 12.5, 12.8, 12.7) als Halbzeug ausgeführt ist.

21. Schmiermittelversorgungssystem nach einem der Ansprüche 10 bis 19, **dadurch gekennzeichnet, daß** das Verteilerelement (12.4) als Band ausgeführt ist.

22. Schmiermittelversorgungssystem nach einem der Ansprüche 10 bis 19, **dadurch gekennzeichnet, daß** das Verteilerelement (12.8a, 12.8b) von wenigstens einem Teil eines Kolbenstützringes gebildet ist.

23. Schmiermittelversorgungssystem nach einem der Ansprüche 10 bis 19, **dadurch gekennzeichnet, daß** das Verteilerelement (12) von wenigstens einem Teil eines Sprengringes gebildet ist.

24. Schmiermittelversorgungssystem nach einem der Ansprüche 10 bis 19, **dadurch gekennzeichnet, daß** das Verteilerelement (12) von wenigstens einem Teil eines O-Ringes gebildet ist.

25. Schmiermittelversorgungssystem nach einem der Ansprüche 10 bis 24, **dadurch gekennzeichnet, daß** das Verteilerelement (12.6) als Baugruppe aus einem Dichtelement (12.6b) und einem Stützelement (36) ausgeführt ist, wobei das Stützelement bei Anordnung der Verteilernut im äußeren Element in radialer Richtung betrachtet innen und bei Anordnung der Verteilernut (6.9) im inneren Element (3.9) außen angeordnet ist.

26. Schmiermittelversorgungssystem nach Anspruch 25, **dadurch gekennzeichnet, daß** das Dichtelement (12.6b) in radialer Richtung elastisch ausgeführt ist.

27. Schmiermittelversorgungssystem nach einem der Ansprüche 25 oder 26, **gekennzeichnet durch** die folgenden Merkmale:
27.1 das Dichtelement liegt dichtend an der Innenwand der Verteilernut an;
27.2 wenigstens ein Teilbereich der in Einbaulage in radialer Richtung betrachteten Innenfläche des Dichtelementes steht in Kontakt mit der Außenfläche des Stützelementes;
27.3 das Dichtelement weist wenigstens einen Durchlaßquerschnitt auf, welcher sich in Einbaulage in radialer Richtung betrachtet von seiner Außenfläche zu seiner Innenfläche erstreckt;
27.4 die in Einbaulage in radialer Richtung betrachtet äußere Fläche des Stützelementes weist eine erhöhte Rauigkeit gegenüber der Innenfläche des Dichtelementes auf.

28. Schmiermittelversorgungssystem nach einem der Ansprüche 1 bis 9, **gekennzeichnet durch** die folgenden Merkmale:
28.1 das Verteilerelement ist derart gestaltet und ausgelegt und mit der Verteilernut gekoppelt, daß im Bereich der Profillücken Übertrittsquerschnitte für Schmiermittel zwischen dem ersten Teilbereich und dem zweiten Teilbereich vorgesehen sind;
28.2 die Summe der Fläche der Übertrittsquerschnitte ist<<als die Summe der Flächen der Querschnitte der Schmiermittelversorgungskanäle.

29. Schmiermittelversorgungssystem nach Anspruch 28, **dadurch gekennzeichnet, daß** die Übertrittsquerschnitte von Aussparungen und/oder Öffnungen im Verteilerelement gebildet werden.

30. Schmiermittelversorgungssystem nach einem der Ansprüche 28 oder 29, **gekennzeichnet durch** die folgenden Merkmale:
30.1 die Verteilernut im äußeren Element (4) ist in radialer Richtung in zwei Teilnuten unterteilt - eine erste, in radialer Richtung äußere Teilnut und eine zweite in radialer Richtung innere Teilnut;
30.2 die innere Teilnut weist in einem Axialschnitt **durch** das äußere Element der Profilverbindung betrachtet einen größeren Querschnitt als die äußere Teilnut auf;
30.3 die Übertrittsquerschnitte werden von taschenförmigen Ausnehmungen im Bereich des Überganges von der ersten zur zweiten Teilnut gebildet.

31. Schmiermittelversorgungssystem nach einem der Ansprüche 28 bis 30, **dadurch gekennzeichnet, daß** das Verteilerelement (12, 12.9) in Umfangsrichtung oder radialer Richtung steif ausgeführt ist.

## Claims

1. A lubricant supply system (1) for a profile connection (2) of a shaft (3) and a hub (4) with axial longitudinal displaceability,
1.1 with a first outer element of the profile connection, either shaft or hub, enclosing another second inner element of the profile connection, either shaft or hub, at least partly in the circumferential direction;
1.2 with at least one distributing groove (6) being arranged in the zone of the profile base (9) on the inner circumference (5) of the outer element (4) of the profile connection (2), which distributing groove extends over at least a part of the inner circumference (5) in the circumferential direction;
1.3 with the distributing groove (6) being coupled with at least one lubricant supply conduit (8) extending to the outer circumference of the outer element (4) of the profile connection (2);
**characterized by** the following features:
1.4 in the distributing groove (6) a distributing element (12) is arranged which extends in the circumferential direction over the length of the distributing groove (6);
1.5 the distributing element (12) subdivides the distributing groove into a first radial outside and a second radial inside partial area (13.1, 13.2);
1.6 the distributing element (12) and the distributing groove (6) are arranged and configured in such a way that during their co-operation they form a plurality of valve locations between the first (13.1) and the second partial area (13.2) of the distributing groove (6).

2. A lubricant supply system (1) for a profile connection (2) of a shaft (3) and a hub (4) with axial longitudinal displaceability,
2.1 with a first outer element of the profile connection, either shaft or hub, enclosing another second inner element of the profile connection, either shaft or hub, at least partly in the circumferential direction;
2.2 with at least one distributing groove (6.9) being arranged in the zone of the profile base (63) on the outer circumference of the inner element (3.9) of the profile connection (2.9), which distributing groove extends over at least a part of the outer circumference (60) in the circumferential direction;
2.3 with the distributing groove (6.9) being coupled with at least one lubricant supply conduit (64) extending through the interior of the inner element (3.9) of the profile connection (2.9);
**characterized by** the following features:
2.4 in the distributing groove (6.9) a distributing element (12.9) is arranged which extends in the circumferential direction over the length of the distributing groove (6.9);
2.5 the distributing element (12.9) subdivides the distributing groove into a first radial outside and a second radial inside partial area (13.1.9, 13.2.9);
2.6 the distributing element (12.9) and the distributing groove (6.9) are arranged and configured in such a way that during their co-operation they form a plurality of valve locations between the first (13.1.9) and the second partial area (13.2.9) of the distributing groove (6.9).

3. A lubricant supply system as claimed in claim 1 or 2, **characterized by** the following features:
3.1 a plurality of distributing grooves (6.7a, 6.7b) are provided which extend in the circumferential direction over at least a part of the circumference and are disposed one after the other in the circumferential direction;
3.2 the distributing grooves (6.7a, 6.7b) are free from any coupling among each other.

4. A lubricant supply system as claimed in claim 3, **characterized in that** the distributing grooves (6.7a, 6.7b) which are arranged one after the other in the circumferential direction are each only separated by a profile projection on the outside element (4.7) of the profile connection (2.7) when the distributing groove (6) is arranged on the outside element (4) or only by a profile projection on the inner element (3) of the profile connection (2) when the distributing groove is arranged on the inner element.

5. A lubricant supply system as claimed in claim 1 or 2, **characterized by** the following features:
5.1 the distributing groove (6) extends in the circumferential direction about the entire circumference;
5.2 the distributing element (12) is arranged as an annular distributing element.

6. A lubricant supply system as claimed in claim 5, **characterized by** the following features:
6.1 the distributing groove is
- arranged symmetrically with respect to a plurality of axes situated in the cross-sectional plane of the outside element (4) of the profile connection (2) and extending through the axis of rotational symmetry of the distributing groove (6) in the case of arrangement in the outer element (4) of the profile connection (2) as seen in a view towards the cross section of the outer element (4) of the profile connection (2), or
- arranged symmetrically with respect to a plurality of axes situated in the cross-sectional plane of the inside element (3.9) and extending through the axis of rotational symmetry of the distributing groove (6.9) in the case of arrangement in the inner element (3.9) of the profile connection (2.9) as seen in a view towards the cross section of the inner element (3.9);
6.2 the axes of symmetry of the distributing groove which are situated in the cross section of the outer element (4) or the inner element (3.9) of the profile connection (2) extend perpendicular to the axis of rotational symmetry of the outside element (4) or the inside element (3.9) of the profile connection (2 or 2.9).

7. A lubricant supply system as claimed in one of the claims 5 or 6,
**characterized in that** the distributing groove (6, 6.9) is provided with a symmetrical configuration and comprises an oval cross section when projecting a view onto its cross section in a plane with the cross section of the outer element (4) or the inner element (3.9) of the profile connection (2 or 2.9).

8. A lubricant supply system as claimed in one of the claims 1 to 7,
**characterized in that** the second partial area (13.2), when seen in an axial cross-sectional view through the outer element (4) of the profile connection, simultaneously comprises at least a part of the profile gap arising by incorporating the groove into the profile projections of the outer element (4) of the profile connection (2) when arranging the distributing groove in the outer element or, when seen in an axial cross-sectional view through the inner element (3.9) of the profile connection, it simultaneously comprises at least a part of the profile gaps arising by incorporating the groove into the profile projections of the inner element (3.9) when arranging the distributing groove in the inner element (3.9).

9. A lubricant supply system as claimed in one of the claims 1 to 8,
**characterized by** the following features:
9.1 the second partial area (13.2) of the distributing groove (6) is coupled with intermediate spaces which are formed by profile gaps in the profile projections of the outer element or with intermediate spaces which are formed by profile gaps in the profile projections of the inner element (3.9) of the profile connection (2.9);
9.2 the width of the intermediate space is larger than the width of the second partial area (13.2, 13.2.9).

10. A lubricant supply system as claimed in one of the claims 1 to 9,
**characterized by** the following features:
10.1 the distributing element (12, 12.9) is arranged and configured such that
10.1.1 in the case of lubricant supply it seals both partial areas, namely first partial area (13.1, 13.1.9) and second partial area (13.2, 13.2.9), with respect to each until reaching a certain predetermined pressure in the first partial area;
10.1.2 upon reaching or exceeding said specific pressure, it releases transfer gaps between the first and second partial area (13.1, 13.2, 13.1.9, 13.2.9).

11. A lubricant supply system as claimed in claim 10, **characterized in that** the transfer gaps are provided with a cross-sectional surface area whose sum total is << than the sum total of the cross-sectional surface areas of the lubricant supply conduits (8, 64).

12. A lubricant supply system as claimed in claim 11, **characterized in that** the ratio of the sum total of the cross-sectional surface areas of the transfer gaps to the sum total of the cross-sectional surface areas of the lubricant supply conduits (8, 64) can be determined freely by the choice of the material of the distributing element (12, 12.9) and/or the fit between the distributing element (12, 12.9) and the distributing groove (6, 6.9).

13. A lubricant supply system as claimed in one of the claims 1 to 12,
**characterized in that** the distributing groove (6.8a, 6.8b) is provided in the radial direction with a substantially constant cross section.

14. A lubricant supply system as claimed in one of the claims 1 to 12,
**characterized by** the following features:
14.1 the distributing groove (6, 6.9) is subdivided in the radial direction into two partial grooves, namely a first partial groove (6.2, 6.1) which is the outer one in the radial direction and a second one which is the inner partial groove (6.1.9, 6.2) in the radial direction;
14.2 when arranged in the outer element, the inner partial groove (6.1.9, 6.2) has a larger cross section than the outer partial groove (6.2.9, 6.1) when seen in an axial sectional view through the outer element (4) of the profile connection (2) and, when arranged in the inner element (3.9), it shows a smaller cross section than the outer partial groove (6.2.9) when seen in an axial sectional view through the inner element (3.) of the profile connection (2.9);
14.3 the distributing element (12) is arranged in the inner partial groove.

15. A lubricant supply system as claimed in claim 14, **characterized in that** the distributing element (12.5) rests on the cross-sectional transition region in the inner partial groove.

16. A lubricant supply system as claimed in one of the claims 10 to 15,
**characterized in that** the width of the distributing element (12, 12.3, 12.4, 12.5, 12.6, 12.7, 12.8, 12.9) is chosen in such a way that the same comprises together with the width of the distributing groove (6.6, 6.3, 6, 6.9, 6.2a, 6.2b) at least the tolerance of a transition fit or a force fit.

17. A lubricant supply system as claimed in one of the claims 10 to 16,
**characterized in that** the distributing element (12) is arranged so as to be elastic in the circumferential direction and rigidly over its width.

18. A lubricant supply system as claimed in one of the claims 10 to 17,
**characterized in that** the distributing element (12.5) comprises several layers.

19. A lubricant supply system as claimed in claim 18, **characterized in that** the individual layers are provided with an arrangement so as to be mutually displaceable with respect to each other in the axial direction.

20. A lubricant supply system as claimed in one of the claims 10 to 19,
**characterized in that** the distributing element (12, 12.9, 12.3, 12.6, 12.5, 12.8, 12.7) is arranged as a semi-finished product.

21. A lubricant supply system as claimed in one of the claims 10 to 19,
**characterized in that** the distributing element (12.4) is arranged as a band.

22. A lubricant supply system as claimed in one of the claims 10 to 19,
**characterized in that** the distributing element (12.8a, 12.8b) is formed by at least a part of a piston bearing ring.

23. A lubricant supply system as claimed in one of the claims 10 to 19,
**characterized in that** the distributing element (12) is formed by at least one part of a retainer ring.

24. A lubricant supply system as claimed in one of the claims 10 to 19,
**characterized in that** the distributing element (12) is formed by at least one part of an O-ring.

25. A lubricant supply system as claimed in one of the claims 10 to 24,
**characterized in that** the distributing element (12.6) is arranged as a module made of a sealing element (12.6b) and a supporting element (36), with the supporting element being arranged inwardly as seen in the radial direction when the distributing groove is arranged in the outer element and outwardly when the distributing groove (6.9) is arranged in the inner element (3.9).

26. A lubricant supply system as claimed in claim 25, **characterized in that** the sealing element (12.6b) is arranged elastically in the radial direction.

27. A lubricant supply system as claimed in one of the claims 25 or 26,
**characterized by** the following features:
27.1 the sealing element rests in a sealing fashion on the inner wall of the distributing groove;
27.2 at least a partial region of the surface of the sealing element which is on the inside when viewed in the radial direction in the mounted position is in contact with the outside surface of the supporting element;
27.3 the sealing element is provided with at least one passage cross section which, when viewed in the radial direction in the mounted position, extends from its outside surface to its inside surface;
27.4 the surface of the supporting element which is on the outside when viewed in the radial direction in the mounted position is provided with a higher roughness than the inside surface of the sealing element.

28. The lubricant supply system as claimed in one of the claims 1 to 9,
**characterized by** the following features:
28.1 the distributing element is arranged and configured and coupled with the distributing groove in such a way that in the region of the profile gaps there are transfer cross sections for the lubricant between the first partial area and the second partial area;
28.2 the sum total of the surface area of the transfer cross sections is «than the sum total of the surface areas of the cross sections of the lubricant supply conduits.

29. A lubricant supply system as claimed in claim 28, **characterized in that** the transfer cross sections are formed by recesses and/or openings in the distributing element.

30. A lubricant supply system as claimed in one of the claims 28 or 29,
**characterized by** the following features:
30.1 the distributing groove in the outer element (4) is subdivided in the radial direction into two partial grooves, namely a first partial groove which is the outer one in the radial direction and a second partial groove which is the inner one in the radial direction;
30.2 the inner partial groove has a larger cross section than the outer partial groove when seen in an axial sectional view through the outer element of the profile connection;
30.3 the transfer cross sections are formed by pocket-like recesses in the transition zone from the first to the second partial groove.

31. A lubricant supply system as claimed in one of the claims 28 to 30, **characterized in that** the distributing element (12, 12.9) is provided with a stiff arrangement in the circumferential direction or the radial direction.

## Revendications

1. Système d'alimentation en lubrifiant (1) pour un raccord de profilé (2) entre un arbre (3) et un moyeu (4) à coulissement longitudinal dans la direction axiale
1.1. un premier élément extérieur du raccord de profilé - arbre ou moyeu - entoure du moins partiellement dans la direction circonférentielle un autre, deuxième, élément intérieur du raccord de profilé - moyeu ou arbre - ;
1.2 au moins une rainure de distribution (6), qui s'étend en direction circonférentielle sur au moins une partie de la circonférence intérieure (5), est disposée sur la circonférence intérieure (5) de l'élément extérieur (4) du raccord de profilé (2) dans la région située en fond de profilé (9) ;
1.3 la rainure de distribution (6) est raccordée à au moins un canal d'alimentation en lubrifiant (8) qui s'étend en direction de la circonférence extérieure de l'élément extérieur (4) du raccord de profilé (2) ;
**caractérisé par** les dispositions suivantes :
1.4 un élément de distribution (12) qui s'étend en direction circonférentielle le long de la rainure de distribution (6) est disposé dans la rainure de distribution (6) ;
1.5 l'élément de distribution (12) divise la rainure de distribution en une première partie radialement située à l'extérieur et en une deuxième partie radialement située à l'intérieur (13.1, 13.2) ;
1.6 l'élément de distribution (12) et la rainure de distribution (6) sont conçus et configurés de manière à ce que, par leur coopération, ils forment, entre la première (13.1) et la deuxième partie (13.2) de la rainure de distribution (6), une pluralité d'endroits faisant fonction de soupape.

2. Système d'alimentation en lubrifiant (1) pour un raccord de profilé (2) entre un arbre (3) et un moyeu (4) à coulissement longitudinal dans la direction axiale
2.1 un premier élément extérieur du raccord de profilé - arbre ou moyeu - entoure du moins partiellement dans la direction circonférentielle un autre, deuxième, élément intérieur du raccord de profilé - moyeu ou arbre - ;
2.2au moins une rainure de distribution (6.9), qui s'étend en direction circonférentielle sur au moins une partie de la circonférence extérieure (60), est disposée sur la circonférence extérieure de l'élément intérieur (3.9) du raccord de profilé (2.9) dans la région située en fond de profilé (63) ;
2.3 la rainure de distribution (6.9) est raccordée à au moins un canal d'alimentation en lubrifiant (64) qui traverse l'intérieur de l'élément intérieur (3.9) du raccord de profilé (2.9) ;
**caractérisé par** les dispositions suivantes :
2.4 un élément de distribution (12.9) qui s'étend en direction circonférentielle le long de la rainure de distribution (6.9) est disposé dans la rainure de distribution (6.9) ;
2.5 l'élément de distribution (12.9) divise la rainure de distribution en une première partie radialement située à l'extérieur et en une deuxième partie radialement située à l'intérieur (13.1.9, 13.2.9) ;
2.6 l'élément de distribution (12.9) et la rainure de distribution (6.9) sont conçus et configurés de manière à ce que, par leur coopération, ils forment, entre la première (13.1.9) et la deuxième partie (13.2.9) de la rainure de distribution (6.9), une pluralité d'endroits faisant fonction de soupape.

3. Système d'alimentation en lubrifiant selon la revendication 1 ou 2,
**caractérisé par** les dispositions suivantes :
3.1 une pluralité de rainures de distribution (6.7a, 6.7b) qui sont disposées l'une derrière l'autre dans la direction circonférentielle et qui s'étendent sur au moins une partie de la circonférence sont prévues ;
3.2 les rainures de distribution (6.7a, 6.7b) ne sont pas raccordées.

4. Système d'alimentation en lubrifiant selon la revendication 3,
**caractérisé en ce que** les différentes rainures de distribution (6.7a, 6.7b) disposées l'une derrière l'autre dans la direction circonférentielle ne sont séparées l'une de l'autre que par une saillie de profilé située sur l'élément extérieur (4.7) du raccord de profilé (2.7) lorsque la rainure de distribution (6) est pratiquée dans l'élément extérieur (4) ou que par une saillie de profilé située sur l'élément intérieur (3) du raccord de profilé (2) lorsque la rainure de distribution est pratiquée dans l'élément intérieur.

5. Système d'alimentation en lubrifiant selon la revendication 1 ou 2,
**caractérisé par** les dispositions suivantes :
5.1 la rainure de distribution (6) s'étend en direction circonférentielle sur toute la circonférence ;
5.2 l'élément de distribution (12) est réalisé sous forme d'élément de distribution annulaire.

6. Système d'alimentation en lubrifiant selon la revendication 5,
**caractérisé par** les dispositions suivantes :
6.1 la rainure de distribution est,
- lorsqu'elle est disposée dans l'élément extérieur (4) du raccord de profilé (2), et dans une vue sur la section de l'élément extérieur (4) du raccord de profilé (2), réalisée symétrique par rapport à une multitude d'axes qui sont situés dans le plan transversal de l'élément extérieur (4) du raccord de profilé (2) et qui passent par l'axe de symétrie de révolution de la rainure de distribution (6) ou
- lorsqu'elle est disposée dans l'élément intérieur (3.9) du raccord de profilé (2.9), et dans une vue sur la section de l'élément intérieur (3.9), réalisée symétrique par rapport à une multitude d'axes qui sont situés dans le plan transversal de l'élément intérieur (3.9) et qui passent par l'axe de symétrie de révolution de la rainure de distribution (6.9) ;
6.2 les axes de symétrie de la rainure de distribution situées dans la section de l'élément extérieur (4) ou de l'élément intérieur (3.9) du raccord de profilé (2, 2.9) sont perpendiculaires à l'axe de symétrie de révolution de l'élément extérieur (4) ou de l'élément intérieur (3.9) du raccord de profilé (2 ou 2.9).

7. Système d'alimentation en lubrifiant selon l'une quelconque des revendications 5 ou 6, **caractérisé en ce que**, vue dans une projection sur sa section dans un plan avec la section de l'élément extérieur (4) ou de l'élément intérieur (3.9) du raccord de profilé (2, voire 2.9), la rainure de distribution (6, 6.9) est symétrique et de section ovale.

8. Système d'alimentation en lubrifiant selon l'une quelconque des revendications 1 à 7, **caractérisé en ce que** la deuxième partie (13.2) comporte au moins en partie l'intervalle vu dans une coupe axiale de l'élément extérieur (4) du raccord de profilé (2) et formé dans le profilé par la rainure pratiquée dans les saillies du profilé de l'élément extérieur (4) du raccord de profilé (2) lorsque la rainure de distribution est disposée dans l'élément extérieur ou que la deuxième partie (13.2.9) comporte au moins en partie les intervalles vus dans une coupe axiale de l'élément intérieur (3.9) et formés dans le profilé par la rainure pratiquée dans les saillies du profilé de l'élément intérieur (3.9) lorsque la rainure de distribution est disposée dans l'élément intérieur (3.9).

9. Système d'alimentation en lubrifiant selon l'une quelconque des revendications 1 à 8, **caractérisé par** les dispositions suivantes :
9.1 la deuxième partie (13.2) de la rainure de distribution (6) est raccordée à des espaces formés par des intervalles dans les saillies de profilé de l'élément extérieur du raccord de profilé ou à des espaces formés par des intervalles dans les saillies de profilé de l'élément intérieur (3.9) du raccord de profilé (2.9) ;
9.2 la largeur de l'espace est supérieure à la largeur de la deuxième partie (13.2, 13.2.9).

10. Système d'alimentation en lubrifiant selon l'une quelconque des revendications 1 à 9, **caractérisé par** les dispositions suivantes :
10.1 l'élément de distribution (12, 12.9) est conçu et configuré de telle sorte que,
10.1.1 lorsqu'elles sont alimentées en lubrifiant, les deux parties - la première partie (13.1, 13.1.9) et la deuxième partie (13.2, 13.2.9) - s'isolent hermétiquement l'une l'autre jusqu'à ce qu'une certaine pression, qui peut être définie au préalable, est atteinte dans la première partie
10.1.2 une fois cette certaine pression atteinte ou dépassée, ledit élément de distribution ouvre les fentes de débordement situées entre la première et la deuxième partie (13.1, 13.2, 13.1.9, 13.2.9).

11. Système d'alimentation en lubrifiant selon la revendication 10, **caractérisé en ce que** les fentes de débordement ont une aire de section transversale dont la somme est << à la somme des aires de section transversale des canaux d'alimentation en lubrifiant (8, 64).

12. Système d'alimentation en lubrifiant selon la revendication 11, **caractérisé en ce que** le rapport entre la somme des aires de section transversale des fentes de débordement et les aires de section transversale des canaux d'alimentation en lubrifiant (8, 64) est adapté à être fixé librement par le choix du matériau de l'élément de distribution (12, 12.9) et/ou l'ajustement entre l'élément de distribution (12, 12.9) et la rainure de distribution (6, 6.9).

13. Système d'alimentation en lubrifiant selon l'une quelconque des revendications 1 à 12, **caractérisé en ce que**, dans la direction radiale, la rainure de distribution (6.8a, 6.8b) possède une section sensiblement constante.

14. Système d'alimentation en lubrifiant selon l'une quelconque des revendications 1 à 12, **caractérisé par** les dispositions suivantes :
14.1 dans la direction radiale, la rainure de distribution (6, 6.9) est divisée en deux rainures partielles - une première rainure partielle extérieure (6.2.9, 6.1) vue dans la direction radiale et une deuxième rainure partielle intérieure (6.1.9, 6.2) vue dans la direction radiale ;
14.2 vue dans une coupe axiale de l'élément extérieur (4) du raccord de profilé (2), la rainure partielle intérieure (6.1.9, 6.2), lorsqu'elle est disposée dans l'élément extérieur, possède une section supérieure à celle de la rainure partielle extérieure (6.2.9, 6.1) et, lorsqu'elle est disposée dans l'élément intérieur (3.9), vue dans une coupe axiale de l'élément intérieur (3.9) du raccord de profilé (2.9), possède une section inférieure à celle de la rainure partielle extérieure (6.2.9),
14.3 l'élément de distribution (12) est disposé dans la rainure partielle intérieure.

15. Système d'alimentation en lubrifiant selon la revendication 14, **caractérisé en ce que** l'élément de distribution (12.5) est contigu à la zone de transition entre les sections dans la rainure partielle intérieure.

16. Système d'alimentation en lubrifiant selon l'une quelconque des revendications 10 à 15, **caractérisé en ce que** la largeur de l'élément de distribution (12, 12.3, 12.4, 12.5, 12.6, 12.7, 12.8, 12.9) est telle qu'avec la largeur de la rainure de distribution (6.6, 6.3, 6, 6.9, 6.2a, 6.2b), elle comporte au moins l'intervalle de tolérance d'un ajustement de transition ou d'un ajustement avec serrage.

17. Système d'alimentation en lubrifiant selon l'une quelconque des revendications 10 à 16, **caractérisé en ce que** l'élément de distribution (12) est réalisé élastique dans la direction circonférentielle et rigide en largeur.

18. Système d'alimentation en lubrifiant selon l'une quelconque des revendications 10 à 17, **caractérisé en ce que** l'élément de distribution (12.5) comporte plusieurs couches.

19. Système d'alimentation en lubrifiant selon la revendication 18, **caractérisé en ce que** les différentes couches sont réalisées coulissantes l'une par rapport à l'autre dans la direction axiale.

20. Système d'alimentation en lubrifiant selon l'une quelconque des revendications 10 à 19, **caractérisé en ce que** l'élément de distribution (12, 12.9, 12, 3, 12.6, 12.5, 12.8, 12.7) est un produit semi-fini.

21. Système d'alimentation en lubrifiant selon l'une quelconque des revendications 10 à 19, **caractérisé en ce que** l'élément de distribution (12.4) est réalisé sous forme de bande.

22. Système d'alimentation en lubrifiant selon l'une quelconque des revendications 10 à 19, **caractérisé en ce que** l'élément de distribution (12.8a, 12.8b) est formé par une partie au moins d'une bague d'appui de piston.

23. Système d'alimentation en lubrifiant selon l'une quelconque des revendications 10 à 19, **caractérisé en ce que** l'élément de distribution (12) est formé par une partie au moins d'un circlip.

24. Système d'alimentation en lubrifiant selon l'une quelconque des revendications 10 à 19, **caractérisé en ce que** l'élément de distribution (12) est formé par une partie au moins d'un joint rond.

25. Système d'alimentation en lubrifiant selon l'une quelconque des revendications 10 à 24, **caractérisé en ce que** l'élément de distribution (12.6) est réalisé sous forme de sous-ensemble constitué d'un élément joint (12.6b) et d'un élément support (36), l'élément support étant, vu dans la direction radiale, disposé à l'intérieur lorsque la rainure de distribution est disposée dans l'élément extérieur et à l'extérieur lorsque la rainure de distribution (6.9) est disposée dans l'élément intérieur (3.9).

26. Système d'alimentation en lubrifiant selon la revendication 25, **caractérisé en ce que** l'élément joint (12.6b) est réalisé élastique dans la direction radiale.

27. Système d'alimentation en lubrifiant selon l'une quelconque des revendications 25 ou 26, **caractérisé par** les dispositions suivantes :
27.1 l'élément joint est en appui étanche contre la paroi interne de la rainure de distribution ;
27.2 une partie au moins de la surface interne de l'élément joint, vu dans la direction radiale en position d'installation, est en contact avec la surface externe de l'élément support ;
27.3 l'élément joint possède au moins une section de passage qui, vu dans la direction radiale en position d'installation, s'étend depuis sa surface externe jusqu'à sa surface interne ;
27.4 la surface externe de l'élément support vu dans la direction radiale en position d'installation est plus rugueuse que la surface interne de l'élément joint.

28. Système d'alimentation en lubrifiant selon l'une quelconque des revendications 1 à 9, **caractérisé par** les dispositions suivantes :
28.1 l'élément de distribution est conçu, configuré et raccordé à la rainure de distribution de telle sorte que, dans la région des intervalles formés dans le profilé, des sections de débordement sont prévues entré la première partie et la deuxième partie pour le débordement du lubrifiant ;
28.2 la somme des aires des sections de débordement est << à la somme des aires des sections des canaux d'alimentation en lubrifiant.

29. Système d'alimentation en lubrifiant selon la revendication 28, **caractérisé en ce que** les sections de débordement sont formées par des évidements et/ou des ouvertures pratiquées dans l'élément de distribution.

30. Système d'alimentation en lubrifiant selon l'une quelconque des revendications 28 ou 29, **caractérisé par** les dispositions suivantes :
30.1 dans la direction radiale, la rainure de distribution dans l'élément extérieur (4) est divisée en deux rainures partielles - une première rainure partielle extérieure vue dans la direction radiale et une deuxième rainure partielle intérieure vue dans la direction radiale ;
30.2 vue dans une coupe axiale de l'élément extérieur du raccord de profilé, la rainure partielle intérieure possède une section supérieure à celle de la rainure partielle extérieure ;
30.3 les sections de débordement sont formées par des évidements en forme de poche pratiqués dans la zone de transition entre la première et la deuxième rainure partielle.

31. Système d'alimentation en lubrifiant selon l'une quelconque des revendications 28 à 30, **caractérisé en ce que** l'élément de distribution (12, 12.9) est réalisé rigide dans la direction circonférentielle ou dans la direction radiale.
